# EUROPÄISCHE PATENTSCHRIFT

(11) **EP 1 866 401 B1**
(45) Veröffentlichungstag und Bekanntmachung des Hinweises auf die Patenterteilung: **29.09.2010**
(21) Anmeldenummer: 06725335.1
(22) Anmeldetag: 27.03.2006
(51) Int. Cl.: C11D 3/38

(54) **VERWENDUNG VON HYDROPHOBINEN ZUR SCHMUTZABWEISENDEN BEHANDLUNG VON HARTEN OBERFLÄCHEN**
USE OF HYDROPHOBIN FOR HARD SURFACE SOIL-REPELLENT TREATMENT
UTILISATION D'HYDROPHOBINES POUR LE TRAITEMENT ANTISALISSANT DE SURFACES DURES

(30) Priorität: 30.03.2005 DE 102005014844; 29.07.2005 DE 102005036341
(43) Veröffentlichungstag der Anmeldung: 19.12.2007
(73) Patentinhaber: BASF SE, 67056 Ludwigshafen (DE)
(72) Erfinder: BECKER, Heike, 68163 Mannheim (DE); BOLLSCHWEILER, Claus, 69118 Heidelberg (DE); SUBKOWSKI, Thomas, 68526 Ladenburg (DE); BAUS, Ulf, 69221 Dossenheim (DE); LEMAIRE, Hans-Georg, 67117 Limburgerhof (DE); KAROS, Marvin, 68723 Schwetzingen (DE)
(86) Internationale Anmeldenummer: PCT/EP2006/061069
(87) Internationale Veröffentlichungsnummer: WO 2006/103215

(56) Entgegenhaltungen:
- WO-A-01/57066
- WO-A-03/053383
- WO-A-2005/033316
- WO-A-2005/068087
- US-A1- 2006 040 349

## Beschreibung

Die vorliegende Erfindung betrifft die Verwendung von Hydrophobinen zur schmutzabweisenden Behandlung von harten Oberflächen, insbesondere in Kombination mit einer Reinigung der Oberfläche, ein Verfahren zur schmutzabweisenden Behandlung harter Oberflächen, Reinigungsmittel für harte Oberflächen sowie harte Oberflächen mit einer schmutzabweisenden, Hydrophobine umfassenden Beschichtung.

Es ist bekannt, harte Oberflächen, wie beispielsweise Glas, Keramik oder Fußböden mit schmutzabweisenden Beschichtungen zu versehen. Diese Ausrüstungen sollen die Schmutzhaftung vermindern, die Verschmutzung von Oberflächen zumindest erschweren und nachfolgende Reinigungen erleichtern. So sollen beispielsweise Fette, Öle oder Kalkrückstände leichter ablösbar sein, oder es soll das Auftreten eingetrockneter Wasserspuren beim Ablaufen von Wasser vermieden werden

Hierbei kann es sich um permanente, schmutzabweisende Beschichtungen, beispielsweise um dem Lotuseffekt nachempfundene Beschichtungen handeln.

Es kann sich aber auch um einen temporären Schutz handeln. Ein derartiger, temporärer schmutzabweisender Effekt kann beispielsweise durch Substanzen in einer Reinigerformulierung erreicht werden, welche beim Reinigen der Oberfläche aufgetragen werden. Wesentliche Anwendungsgebiete derartiger Reiniger sind Haushaltsanwendungen, wie Reiniger für den Küchen- oder Sanitärbereich, aber auch industrielle Anwendungen, wie beispielsweise Reiniger für die Autowäsche.

EP-A-467 472 offenbart eine Zusammensetzung zur Erhöhung der Hydrophilie von harten Oberflächen, beispielsweise Oberflächen im Haushalt, um ein erleichtertes Reinigen in nachfolgenden Reinigungsschritten zu erreichen. Die Formulierung enthält ein wasserlösliches, ionisches oder nichtionisches Polymer, beispielsweise ein kationisches Polymer mit quaternisierten Ammoniumalkylmethacrylat-Einheiten. Die offenbarten Reinigerformulierungen enthalten 0,02 bis 5 Gew.% des Polymeren.

WO 03/002620 offenbart die Verwendung von (Meth)acrylsäuredialkylaminoalkylestern als Soil-Release-Polymere für harte Oberflächen, beispielsweise Feinsteinböden oder Edelstahloberflächen. Die offenbarten Reinigerformulierungen enthalten 0,1 bis 5 Gew.% des Polymeren.

DE-A-100 61 897 offenbart Reinigungsmittel, die hydrophile, silikathaltige Partikel enthalten, die zu einer verbesserten Schmutzablösung bei gleichzeitiger Verringerung der Wiederanschmutzung führen. Die Partikel lagern sich auf der Oberfläche der zu reinigenden Substanzen an und verändern so die Oberflächeneigenschaften. Hydrophobine sind kleine Proteine von etwa 100 bis 150 Aminosäuren, die charakteristisch für filamentöse Pilze, beispielsweise *Schizophyllum commune,* sind. Sie weisen in aller Regel 8 Cystein-Einheiten auf.

Hydrophobine weisen eine ausgeprägte Affinität zu Grenzflachen auf und eignen sich daher zur Beschichtung von Oberflächen. So lässt sich beispielsweise Teflon mittels Hydrophobinen unter Erhalt einer hydrophilen Oberfläche beschichten.

Hydrophobine können aus natürlichen Quellen isoliert werden. Es können aber auch natürlich nicht vorkommende Hydrophobine mittels chemischer und/oder biotechnologischer Herstellverfahren synthetisiert werden. Unsere ältere Anmeldung DE 102005007480.4 offenbart ein Herstellverfahren für Hydrophobine, die nicht in der Natur vorkommen.

Im Stand der Technik ist die Verwendung von Hydrophobinen für verschiedene Anwendungen vorgeschlagen worden.

WO 96/41882 schlägt die Verwendung von Hydrophobinen als Emulgatoren, Verdicker, oberflächenaktive Substanzen, zum Hydrophilieren hydrophober Oberflächen, zur Verbesserung der Wasserbeständigkeit hydrophiler Substrate, zur Herstellung von Öl-in-Wasser-Emulsionen oder von Wasser-in-Öl-Emulsionen vor. Weiterhin werden pharmazeutische Anwendungen wie die Herstellung von Salben oder Cremes sowie kosmetische Anwendungen wie Hautschutz oder die Herstellung von Haarshampoos oder Haarspulungen vorgeschlagen.

WO 01/57066 offenbart die Beschichtung von Teflon mit Hydrophobinen. Es werden Methoden zur Stabilisierung von Hydrophobinlösungen und die Beschichtung von Oberflächen mit denselben beschrieben.

EP-A-1 252 516 offenbart die Beschichtung von Fenstern, Kontaktlinsen, Biosensoren, medizinischen Vorrichtungen, Behältern zur Durchführung von Versuchen oder zur Lagerung, Schiffrumpfen, festen Teilchen oder Rahmen oder Karosserie von Personenkraftwagen mit einer Hydrophobine enthaltenden Lösung bei einer Temperatur von 30 bis 80 °C.

WO 03/53383 offenbart die Verwendung von Hydrophobin zum Behandeln von Keratin-Materialien in kosmetischen Anwendungen.

WO 03/10331 offenbart einen mit Hydrophobin beschichteten Sensor, beispielsweise eine Messelektrode, an den nicht kovalent weitere Substanzen, z.B. elektroaktive Substanzen, Antikorper oder Enzyme gebunden sind.

WO 05/068087 offenbart, dass nicht nur hohe Temperaturen die Selbst-Assemblierung von Hydrophobinen verhindert, sondern bei niedrigen Temperaturen auch niedrige pH Werte und die Zugabe von Detergenzien die Stabilität der Beschichtung positiv beeinflussen. Die Zugabe von Detergenzien verhindert die Selbst-Assemblierung der Hydrophobine im Zellkulturmedium, in das die Hydrophobine von einem Wirtsorganismus sezerniert werden und das als solches zum Beschichten von Oberflächen verwendet wird.

Keine der zitierten Schriften offenbart die Verwendung von Hydrophobinen zur schmutzabweisenden Behandlung harter Oberflächen.

Aufgabe der Erfindung war es, neuartige Techniken zur Schmutzabweisung bereit zu stellen.

Dementsprechend wurde die Verwendung von Hydrophobinen zur schmutzabweisenden Behandlung harter Oberflächen gefunden. In einer bevorzugten Ausführungsform der Erfindung wird die schmutzabweisende Behandlung in Kombination mit einer Reinigung der Oberfläche vorgenommen.

In einem zweiten Aspekt betrifft die Erfindung ein Verfahren zur schmutzabweisenden Behandlung harter Oberflächen, bei dem man die Oberfläche mit einer Zusammensetzung umfassend mindestens ein Hydrophobin sowie mindestens ein Lösemittel in Kontakt bringt.

In einem dritten Aspekt betrifft die Erfindung ein Reinigungsmittel für harte Oberflächen, welches mindestens ein durch Proteinisolierungsverfahren aus dem Lysat gewonnenes Hydrophobin, mindestens ein Tensid sowie mindestens ein Lösemittel umfasst.

In einem vierten Aspekt betnfft die Erfindung harte Oberflächen gemäß Anspruch 16, welche eine Hydrophobine umfassende, schmutzabweisende Beschichtung aufweisen.

Uberraschenderweise wurde gefunden, dass schon äußerst geringe Mengen von Hydrophobinen zu einer wirksamen, schmutzabweisenden Behandlung von harten Oberflächen ausreichend sind.

Zu der Erfindung ist im Einzelnen das Folgende auszuführen:

Der Begriff "harte Oberflächen" ist dem Fachmann bekannt. Es handelt sich um nicht oder nur in geringem Maße kompressible Oberflächen, insbesondere um glatte Oberflächen, zum Beispiel Oberflächen aus Glas, Keramik, Metallen, wie beispielsweise Edelstahl oder Messing, Emaille, Kunststoff und/oder um lackierte Oberflächen. Beispiele lackierter Oberflächen umfassen die Oberfläche von lackierten Automobilkarosserien oder die Oberfläche von Haushaltsgeräten Bei den harten Oberflächen kann es sich insbesondere um typische, im Haushalt vorkommende Oberflächen handeln, wie beispielsweise die Oberfläche von Fußboden, Armaturen, Waschbecken, Duschwannen, Badewannen, Toiletten, Duschkabinen, Badezimmermöbeln, Küchenmöbeln wie Tischen, Stühlen, Schränken, Arbeitsflächen oder sonstigen Möbeln, Spiegeln, Fenstern, Geschirr, Besteck, Gläsern, die Oberflächen von Haushaltsgeräten wie Waschmaschinen, Geschirrspülmaschinen, Herde oder Dunstabzugshauben.

Der Begriff "schmutzabweisend" ist dem Fachmann bekannt. Mittels einer schmutzabweisenden Behandlung einer Oberfläche wird deren Verschmutzung verhindert oder zumindest erschwert und/oder die Ablosung von Schmutz von der Oberfläche erleichtert. Bei "Schmutz" handelt es sich in bekannter Art und Weise um alle Arten unerwünschter Kontamination von harten Oberflächen mit festen und/oder flüssigen Stoffen. Beispiele von Schmutz umfassen Fette, Öle, Eiweiße, Speisereste, Staub oder Erde. Bei Verschmutzungen kann es sich auch um Kalkablagerungen wie beispielsweise eingetrocknete Wasserspuren handeln, die sich aufgrund der Wasserhärte bilden. Weitere Beispiele umfassen Reste von Reinigungs- und Pflegemitteln zur Körperpflege oder auch unlosliche Kalkseifen, die sich aus derartigen Reinigungs- und Pflegemitteln in Verbindung mit Wasserhärte bilden können, und die sich auf harten Oberflächen wie beispielsweise Waschbecken, Duschverkleidungen oder Badewannen niederschlagen können.

Erfindungsgemäß wird zur schmutzabweisenden Behandlung der harten Oberflächen mindestens ein Hydrophobin verwendet. Es kann nur ein Hydrophobin oder ein Gemisch mehrerer, verschiedener Hydrophobine eingesetzt werden.

Unter dem Begriff "Hydrophobine" im Sinne dieser Erfindung sollen im Folgenden Polypeptide der allgemeinen Strukturformel (I)

Xₙ-C¹-X₁₋₅₀-C²-X_{0.5}-C³-X₁₋₁₀₀-C⁴-X_{1.50}-C⁵-X₁₋₅₀-C⁶-X₀₋₅-C⁷-X₁₋₅₀-_{C}⁸-Xₘ (I)

verstanden werden, wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann. Dabei können X jeweils gleich oder verschieden sein. Hierbei stellen die bei X stehenden Indizes jeweils die Anzahl der Aminosäuren dar, C steht für Cystein, Alanin, Serin, Glycin, Methionin oder Threonin, wobei mindestens vier der mit C benannten Aminosäuren für Cystein stehen, und die Indizes n und m stehen unabhängig voneinander für natürliche Zahlen von 0 und 500, bevorzugt von 15 bis 300.

Die Polypetide gemäß Formel (I) sind weiterhin durch die Eigenschaft charakterisiert, dass sie bei Raumtemperatur nach Beschichten einer Glasoberfläche eine Vergrößerung des Kontaktwinkels eines Wassertropfens von mindestens 20°, bevorzugt mindestens 25°, besonders bevorzugt mindestens 30°, und ganz besonders bevorzugt mindestens 35° bewirken, jeweils verglichen mit dem Kontaktwinkel eines gleich großen Wassertropfens mit der unbeschichteten Glasoberfläche.

Die mit C¹ bis C⁸ benannten Aminosäuren sind bevorzugt Cysteine; sie können aber auch durch andere Aminosäuren ähnlicher Raumerfüllung, bevorzugt durch Alanin, Serin, Threonin, Methionin oder Glycin ersetzt werden. Allerdings sollen mindestens vier, bevorzugt mindestens 5, besonders bevorzugt mindestens 6 und insbesondere mindestens 7 der Positionen C¹ bis C⁸ aus Cysteinen bestehen. Cysteine können in den erfindungsgemäßen Proteinen entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken. Bei dem oben beschriebenen Austausch von Cysteinen durch Aminosäuren ähnlicher Raumerfüllung werden vorteilhaft solche C-Positionen paarweise ausgetauscht, die intramolekulare Disulfidbrücken untereinander ausbilden können.

Falls in den mit X bezeichneten Positionen auch Cysteine, Serine, Alanine, Glycine, Methionine oder Threonine verwendet werden, kann sich die Nummerierung der einzelnen C-Positionen in den allgemeinen Formeln entsprechend verändern.

Bevorzugt werden Hydrophobine der allgemeinen Formel (II)

Xₙ-C¹-X₃₋₂₅-C²*-X*₀₋₂C³-X₅-₅₀-C⁴-X₂₋₃₅-C⁵-X₂₋₃₅-C⁵-X₂₋₁₅-C⁶-X₀₋₂-C⁷-X₂₋₃₅-C⁸Xₘ (II)

zur Ausführung der vorliegenden Erfindung eingesetzt, wobei X, C und die bei X stehenden Indizes die obige Bedeutung haben, die Indizes n und m für Zahlen zwischen 0 und 300 stehen, und sich die Proteine weiterhin durch die oben erwähnte Kontaktwinkeländerung auszeichnen.

Besonders bevorzugt werden Hydrophobine der allgemeinen Formel (III)

Xₙ-C¹-X₅₋₉-C²-C³-X₁₁₋₃₉-C⁴-X₂₋₂₃-C⁵-X₅₋₉-C⁶-C⁷-X₆₋₁₈-C⁸-Xₘ (III)

eingesetzt, wobei X, C und die bei X stehenden Indizes die obige Bedeutung haben, die Indizes n und m für Zahlen zwischen 0 und 200 stehen, sich die Proteine weiterhin durch die oben erwähnte Kontaktwinkeländerung auszeichnen, und es sich weiterhin bei mindestens 6 der mit C benannten Aminosäuren um Cystein handelt. Besonders bevorzugt handelt es sich bei allen Aminosäuren C um Cystein.

Bei den Resten Xₙ und Xₘ kann es sich um Peptidsequenzen handeln, die natürlicherweise auch mit einem Hydrophobin verknüpft sind. Es kann sich aber auch bei einem oder beiden Resten um Peptidsequenzen handeln, die natürlicherweise nicht mit einem Hydrophobin verknüpft sind, darunter sind auch solche Reste Xₙ und/oder Xₘ zu verstehen, bei denen eine natürlicherweise in einem Hydrophobin vorkommende Peptidsequenz durch eine nicht natürlicherweise in einem Hydrophobin vorkommende Peptidsequenz verlangert ist.

Falls es sich bei Xₙ und/oder Xₘ um natürlicherweise nicht in Hydrophobinen vorkommende Peptidsequenzen handelt, sind derartige Sequenzen in der Regel mindestens 20, bevorzugt mindestens 35, besonders bevorzugt mindestens 50 und ganz besonders bevorzugt mindestens 100 Aminosäuren lang. Ein derartiger, natürlicherweise nicht mit einem Hydrophobin verknüpfter Rest soll im Folgenden auch als Fusionspartner bezeichnet werden. Damit soll ausgedrückt werden, dass die Proteine aus einem Hydrophobinteil und einem Fusionspartnerteil bestehen, die in der Natur nicht zusammen in dieser Form vorkommen.

Der Fusionspartnerteil kann aus einer Vielzahl von Proteinen ausgewählt werden. Es können auch mehrere Fusionspartner mit einem Hydrophobinteil verknüpft werden, beispielsweise am Aminoterminus (Xₙ) und am Carboxyterminus (Xₘ) des Hydrophobinteils. Es können aber auch beispielsweise zwei Fusionspartner mit einer Position (Xₙ oder Xₘ) des erfindungsgemäßen Proteins verknüpft werden.

Besonders geeignete Fusionspartner sind Polypeptide, die natürlicherweise in Mikroorganismen, insbesondere in E. coli oder Bacillus subtilis vorkommen. Beispiele für solche Fusionspartner sind die Sequenzen yaad (SEQ ID NO: 15 und 16), yaae (SEQ ID NO: 17 und 18), und Thioredoxin. Gut geeignet sind auch Fragmente oder Derivate dieser genannten Sequenzen, die nur einen Teil, bevorzugt 70-99 %, besonders bevorzugt 80-98 % der genannten Sequenzen umfassen, oder bei denen einzelne Aminosäuren, bzw. Nukleotide gegenüber der genannten Sequenz verändert sind.

Die erfindungsgemaß verwendeten Proteine können auch noch in ihrer Polypeptidsequenz modifiziert sein, beispielsweise durch Glycosilierung, Acetylierung oder auch durch chemische Quervernetzung beispielsweise mit Glutardialdehyd.

Eine Eigenschaft der erfindungsgemaß verwendeten Proteine ist die Änderung von Oberflächeneigenschaften, wenn die Oberflächen mit den Proteinen beschichtet werden. Die Änderung der Oberflächeneigenschaften lässt sich experimentell dadurch bestimmen, dass der Kontaktwinkel eines Wassertropfens vor und nach der Beschichtung einer Oberfläche mit dem Protein gemessen wird und die Differenz der beiden Messungen ermittelt wird.

Die Durchführung von Kontaktwinkelmessungen ist dem Fachmann prinzipiell bekannt. Die genauen experimentellen Bedingungen zur Messung des Kontaktwinkels sind im experimentellen Teil dargestellt. Unter den dort genannten Bedingungen besitzen die erfindungsgemäß verwendeten Proteine die Eigenschaft, den Kontaktwinkel eines Wassertropfens auf einer Glasoberfläche um mindestens 20°, bevorzugt mindestens 25°, besonders bevorzugt mindestens 30° zu vergrößern.

Im Hydrophobinteil der bisher bekannten Hydrophobine sind die Positionen der polaren und unpolaren Aminosäuren konserviert, was sich in einem charakteristischen Hydrophobizitätsplot äußert. Unterschiede in den biophysikalischen Eigenschaften und in der Hydrophobizität führten zur Einteilung der bisher bekannten Hydrophobine in zwei Klassen, I und II (Wessels et al. 1994, Ann. Rev. Phytopathol., 32, 413-437).

Die assemblierten Membranen aus Klasse I Hydrophobinen sind hochgradig unlöslich (selbst gegenüber 1 % SDS bei erhöhter Temperatur) und können nur durch konzentrierte Tnfluoressigsäure (TFA), bzw. Ameisensäure wieder dissoziiert werden. Im Gegensatz dazu sind die assemblierten Formen von Klasse II Hydrophobinen weniger stabil. Sie können bereits durch 60 %iges Ethanol, bzw. 1 % SDS (bei Raumtemperatur) wieder aufgelöst werden.

Ein Vergleich der Aminosäuresequenzen zeigt, dass die Länge des Bereichs zwischen Cystein C³ und C⁴ bei Klasse II Hydrophobinen deutlich kürzer ist, als bei Hydrophobinen der Klasse I. Klasse II Hydrophobine weisen weiterhin mehr geladene Aminosäuren als Klasse I auf.

Besonders bevorzugte Hydrophobine zur Ausführung der vorliegenden Erfindung sind die Hydrophobine des Typs dewA, rodA, hypA, hypB, sc3, basf1, basf2, die im nachfolgenden Sequenzprotokoll strukturell charakterisiert sind. Es kann sich auch nur um Teile oder Derivate davon handeln. Es können auch mehrere Hydrophobine, bevorzugt 2 oder 3, gleicher oder unterschiedlicher Struktur miteinander verknüpft und mit einer entsprechenden geeigneten Polypeptidsequenz, die natürlicherweise nicht mit einem Hydrophobin verbunden ist, verknüpft werden.

Besonders geeignet zur Durchführung der vorliegenden Erfindung sind weiterhin die Fusionsproteine mit den in SEQ ID NO: 20, 22, 24 dargestellten Polypeptidsequenzen sowie den dafür codierenden Nukleinsäuresequenzen, insbesondere den Sequenzen gemäss SEQ ID NO: 19, 21, 23. Auch Proteine, die sich ausgehend von den in SEQ ID NO. 20, 22 oder 24 dargestellten Polypeptidsequenzen durch Austausch, Insertion oder Deletion von mindestens einer, bis hin zu 10, bevorzugt 5, besonders bevorzugt 5 % aller Aminosäuren ergeben, und die die biologische Eigenschaft der Ausgangsproteine noch zu mindestens 50 % besitzen, sind besonders bevorzugte Ausführungsformen. Unter biologischer Eigenschaft der Proteine wird hierbei die bereits beschriebene Änderung des Kontaktwinkels um mindestens 20° verstanden.

Die erfindungsgemäß verwendeten Polypeptide lassen sich chemisch durch bekannte Verfahren der Peptidsynthese, beispielsweise durch Festphasensynthese nach Mernfield herstellen.

Natürlich vorkommende Hydrophobine lassen sich aus natürlichen Quellen mittels geeigneter Methoden isolieren. Beispielhaft sei auf Wösten et al., Eur. J Cell Bio. 63, 122-129 (1994) oder WO 96/41882 verwiesen.

Die Herstellung von Fusionsproteinen kann bevorzugt durch gentechnische Verfahren erfolgen, bei denen eine für den Fusionspartner und eine für den Hydrophobinteil codierende Nukleinsäuresequenz, insbesondere DNA-Sequenz, so kombiniert werden, dass in einem Wirtsorganismus durch Genexpression der kombinierten Nukleinsäuresequenz das gewünschte Protein erzeugt wird. Ein derartiges Herstellverfahren ist in unserer älteren Anmeldung DE 102005007480.4 (WO 2006/082251) offenbart.

Geeignete Wirtsorganismen (Produktionsorganismen) für das genannte Herstellverfahren können dabei Prokaryonten (einschließlich der Archaea) oder Eukaryonten sein, besonders Bakterien einschließlich Halobacterien und Methanococcen, Pilze, Insektenzellen, Pflanzenzellen und Säugerzellen, besonders bevorzugt Escherichia coli, Bacillus subtilis, Bacillus megaterium, Aspergillus oryzea, Aspergillus nidulans, Aspergillus niger, Pichia pastoris, Pseudomonas spec., Lactobacillen, Hansenula polymorpha, Trichoderma reesei, SF9 (bzw. verwandte Zellen) u.a.

Im Rahmen der vorliegenden Erfindungen können Expressionskonstrukte, erhalten unter der genetischen Kontrolle regulativer Nukleinsäuresequenzen, eine für ein erfindungsgemäß verwendetes Polypeptid kodierende Nukleinsäuresequenz, sowie Vektoren, umfassend wenigstens eines dieser Expressionskonstrukte zur Herstellung von Hydrophobinen eingesetzt werden.

Vorzugsweise umfassen eingesetzte Konstrukte 5'-stromaufwärts von der jeweiligen kodierenden Sequenz einen Promotor und 3'-stromabwärts eine Terminatorsequenz sowie gegebenenfalls weitere übliche regulative Elemente, und zwar jeweils operativ verknüpft mit der kodierenden Sequenz.

Unter einer "operativen Verknüpfung" versteht man die sequentielle Anordnung von Promotor, kodierender Sequenz, Terminator und gegebenenfalls weiterer regulativer Elemente derart, dass jedes der regulativen Elemente seine Funktion bei der Expression der kodierenden Sequenz bestimmungsgemäß erfüllen kann.

Beispiele für operativ verknüpfbare Sequenzen sind Targeting-Sequenzen sowie Enhancer, Polyadenylierungssignale und dergleichen. Weitere regulative Elemente umfassen selektierbare Marker, Amplifikationssignale, Replikationsursprünge und dergleichen. Geeignete regulatorische Sequenzen sind z. B. beschrieben in Goeddel, Gene Expression Technology: Methods in Enzymology 185, Academic Press, San Diego, CA (1990).

Zusätzlich zu diesen Regulationssequenzen kann die natürliche Regulation dieser Sequenzen vor den eigentlichen Strukturgenen noch vorhanden sein und gegebenenfalls genetisch verändert worden sein, so dass die natürliche Regulation ausgeschaltet und die Expression der Gene erhöht wurde.

Ein bevorzugtes Nukleinsäurekonstrukt enthält vorteilhaft auch eine oder mehrere der schon erwähnten "Enhancer"-Sequenzen, funktionell verknüpft mit dem Promotor, die eine erhöhte Expression der Nukleinsäuresequenz ermöglichen. Auch am 3'-Ende der DNA-Sequenzen können zusätzliche vorteilhafte Sequenzen inseriert werden, wie weitere regulatorische Elemente oder Terminatoren.

Die Nukleinsäuren können in einer oder mehreren Kopien im Konstrukt enthalten sein. Im Konstrukt können noch weitere Marker, wie Antibiotikaresistenzen oder Auxotrophien komplementierende Gene, gegebenenfalls zur Selektion auf das Konstrukt enthalten sein.

Vorteilhafte Regulationssequenzen für das Verfahren sind beispielsweise in Promotoren wie cos-, tac-, trp-, tet-trp-, tet-, lpp-, lac-, lpp-lac-, laclq-T7-, T5-, T3-, gal-, trc-, ara- , rhaP (rhaPBAD) SP6-, lambda-PR- oder im lambda-P-Promotor enthalten, die vorteilhaft in gram-negativen Bakterien Anwendung finden. Weitere vorteilhafte Regulationssequenzen sind beispielsweise in den gram-positiven Promotoren amy und SP02, in den Hefe- oder Pilzpromotoren ADC1, MFalpha. AC, P-60, CYC1, GAPDH, TEF, rp28, ADH enthalten.

Es können auch künstliche Promotoren für die Regulation verwendet werden.

Das Nukleinsäurekonstrukt wird zur Expression in einem Wirtsorganismus vorteilhafterweise in einen Vektor, wie beispielsweise einem Plasmid oder einem Phagen insertiert, der eine optimale Expression der Gene im Wirt ermöglicht. Unter Vektoren sind außer Plasmiden und Phagen auch alle anderen dem Fachmann bekannten Vektoren, also z. B. Viren, wie SV40, CMV, Baculovirus und Adenovirus, Transposons, IS-Elemente, Phasmide, Cosmide, und lineare oder zirkuläre DNA, sowie das Agrobacterium-System zu verstehen.

Diese Vektoren können autonom im Wirtsorganismus repliziert oder chromosomal repliziert werden. Diese Vektoren stellen eine weitere Ausgestaltung der Erfindung dar. Geeignete Plasmide sind beispielsweise in E. coli pLG338, pACYC184, pBR322, pUC18, pUC19, pKC30, pRep4, pHS1, pKK223-3, pDHE19.2, pHS2, pPLc236, pMBL24, pLG200, pUR290, pIN-III"3-B1, tgt11 oder pBdCI, in Streptomyces pIJ101, pIJ364, pIJ702 oder pIJ361, in Bacillus pUB110, pC194 oder pBD214, in Corynebacterium pSA77 oder pAJ667, in Pilzen pALS1, pIL2 oder pBB116, in Hefen 2alpha, pAG-1, YEp6, YEp13 oder pEMBLYe23 oder in Pflanzen pLGV23, pGHlac+, pBIN19, pAK2004 oder pDH51. Die genannten Plasmide stellen eine kleine Auswahl der möglichen Plasmide dar. Weitere Plasmide sind dem Fachmann bekannt und können beispielsweise aus dem Buch Cloning Vectors (Eds. Pouwels P. H. et al. Elsevier, Amsterdam-New York-Oxford, 1985, ISBN 0 444 904018) entnommen werden.

Vorteilhaft enthält das Nukleinsäurekonstrukt zur Expression der weiteren enthaltenen Gene zusätzlich noch 3'- und/oder 5'-terminale regulatorische Sequenzen zur Steigerung der Expression, die je nach ausgewähltem Wirtsorganismus und Gen oder Gene für eine optimale Expression ausgewählt werden.

Diese regulatorischen Sequenzen sollen die gezielte Expression der Gene und der Proteinexpression ermöglichen. Dies kann beispielsweise je nach Wirtsorganismus bedeuten, dass das Gen erst nach Induktion exprimiert oder überexprimiert wird, oder dass es sofort exprimiert und/oder überexprimiert wird.

Die regulatorischen Sequenzen bzw. Faktoren können dabei vorzugsweise die Genexpression der eingeführten Gene positiv beeinflussen und dadurch erhöhen. So kann eine Verstärkung der regulatorischen Elemente vorteilhafterweise auf der Transkriptionsebene erfolgen, indem starke Transkriptionssignale wie Promotoren und/oder "Enhancer" verwendet werden. Daneben ist aber auch eine Verstärkung der Translation möglich, indem beispielsweise die Stabilität der mRNA verbessert wird.

In einer weiteren Ausgestaltungsform des Vektors kann der das Nukleinsäurekonstrukt oder die Nukleinsäure enthaltende Vektor auch vorteilhaft in Form einer linearen DNA in die Mikroorganismen eingeführt werden und über heterologe oder homologe Rekombination in das Genom des Wirtsorganismus integriert werden. Diese lineare DNA kann aus einem linearisierten Vektor wie einem Plasmid oder nur aus dem Nukleinsäurekonstrukt oder der Nukleinsäure bestehen.

Für eine optimale Expression heterologer Gene in Organismen ist es vorteilhaft die Nukleinsäuresequenzen entsprechend des im Organismus verwendeten spezifischen "codon usage" zu verändern. Der "codon usage" lässt sich anhand von Computerauswertungen anderer, bekannter Gene des betreffenden Organismus leicht ermitteln.

Die Herstellung einer Expressionskassette erfolgt durch Fusion eines geeigneten Promotors mit einer geeigneten kodierenden Nukleotidsequenz sowie einem Terminator- oder Palyadenytrerungssignal. Dazu verwendet man gängige Rekombinations- und Klonierungstechniken, wie sie beispielsweise in T. Maniatis, E. F.Fritsch und J. Sambrook, Molecular Cloning: A Laboratory Manual, Cold Spring Harbor Laboratory, Cold Spnng Harbor, NY (1989) sowie in T. J. Silhavy, M. L. Berman und L. W Enquist, Experiments with Gene Fusions, Cold Spring Harbor Laboratory, Cold Spring Harbor, NY (1984) und in Ausubel, F. M. et al., Current Protocols in Molecular Biology, Greene Publishing Assoc, and Wiley Interscience (1987) beschrieben sind.

Das rekombinante Nukleinsaurekonstrukt bzw. Genkonstrukt wird zur Expression in einem geeigneten Wirtsorganismus, vorteilhaft in einen wirtsspezifischen Vektor insertiert, der eine optimale Expression der Gene im Wirt ermöglicht. Vektoren sind dem Fachmann wohl bekannt und können beispielsweise aus "Cloning Vectors" (Pouwels P. H. et al., Hrsg, Elsevier, Amsterdam-New York-Oxford, 1985) entnommen werden.

Mit Hilfe der Vektoren sind rekombinante Mikroorganismen herstellbar, welche beispielsweise mit wenigstens einem Vektor transformiert sind und zur Produktion der erfindungsgemäß verwendeten Polypeptide eingesetzt werden können. Vorteilhafterweise werden die oben beschriebenen rekombinanten Konstrukte in ein geeignetes Wirtssystem eingebracht und exprimiert. Dabei werden vorzugsweise dem Fachmann bekannte geläufige Klonierungs- und Transfektionsmethoden, wie beispielsweise Co-Präzipitation, Protoplastenfusion, Elektroporation, retrovirale Transfektion und dergleichen, verwendet, um die genannten Nukleinsäuren im jeweiligen Expressionssystem zur Expression zu bringen. Geeignete Systeme werden beispielsweise in Current Protocols in Molecular Biology, F.Ausubel et al., Hrsg., Wiley Interscience, New York 1997, oder Sambrook et al. Molecular Cloning: A Laboratory Manual. 2. Aufl., Cold Spring Harbor Laboratory, Cold Spring Harbor Laboratory Press, Cold Spring Harbor, NY, 1989 beschrieben.

Es sind auch homolog rekombinierte Mikroorganismen herstellbar. Dazu wird ein Vektor hergestellt, der zumindest einen Abschnitt eines erfindungsgemäß zu verwendenden Gens oder einer kodierenden Sequenz enthält, worin gegebenenfalls wenigstens eine Aminosäure-Deletion, -Addition oder -Substitution eingebracht worden ist, um die Sequenz zu verändern, z. B. funktionell zu disruptieren ("Knockout"- Vektor). Die eingebrachte Sequenz kann z. B. auch ein Homologes aus einem verwandten Mikroorganismus sein oder aus einer Säugetier-, Hefe- oder Insektenquelle abgeleitet sein. Der zur homologen Rekombination verwendete Vektor kann alternativ derart ausgestaltet sein, dass das endogene Gen bei homologer Rekombination mutiert oder anderweitig verändert ist, jedoch noch das funktionelle Protein kodiert (z. B. kann der stromaufwärts gelegene regulatorische Bereich derart verändert sein, dass dadurch die Expression des endogenen Proteins verändert wird). Der veränderte Abschnitt des erfindungsgemaß verwendeten Gens ist im homologen Rekombinationsvektor. Die Konstruktion geeigneter Vektoren zur homologen Rekombination ist z. B. beschrieben in Thomas, K. R. und Capecchi, M. R. (1987) Cell 51: 503.

Als rekombinante Wirtsorganismen für die erfindungsgemäß verwendete Nukleinsäure oder dem Nukleinsäurekonstrukt kommen prinzipiell alle prokaryontischen oder eukaryontrischen Organismen in Frage. Vorteilhafterweise werden als Wirtsorganismen Mikroorganismen wie Bakterien, Pilze oder Hefen verwendet. Vorteilhaft werden grampositive oder gram-negative Bakterien, bevorzugt Bakterien der Familien Enterobactenaceae, Pseudomonadaceae, Rhizobiaceae, Streptomycetaceae oder Nocardiaceae, besonders bevorzugt Bakterien der Gattungen Escherichia, Pseudomonas, Streptomyces, Nocardia, Burkholderia, Salmonella, Agrobacterium oder Rhodococcus verwendet

Die im Herstellverfahren für Fusionsproteine verwendeten Organismen werden je nach Wirtsorganismus in dem Fachmann bekannter Weise angezogen bzw. gezüchtet. Mikroorganismen werden in der Regel in einem flüssigen Medium, das eine Kohlenstoffquelle meist in Form von Zuckern, eine Stickstoffquelle meist in Form von organischen Stickstoffquellen wie Hefeextrakt oder Salzen wie Ammoniumsulfat, Spurenelemente wie Eisen-, Mangan- und Magnesiumsalze sowie gegebenenfalls Vitamine enthält, bei Temperaturen zwischen 0 und 100 °C, bevorzugt zwischen 10 bis 60 °C unter Sauerstoffbegasung angezogen. Dabei kann der pH-Wert der Nahrflüssigkeit auf einem festen Wert gehalten werden, das heißt wahrend der Anzucht reguliert werden oder nicht. Die Anzucht kann "batch"-weise, "semi-batch"-weise oder kontinuierlich erfolgen. Nahrstoffe können zu Beginn der Fermentation vorgelegt oder semikontinuierlich oder kontinuierlich nachgefüttert werden. Die Enzyme können nach dem in den Beispielen beschriebenen Verfahren aus den Organismen isoliert werden oder als Rohextrakt für die Reaktion verwendet werden.

Die erfindungsgemäß verwendeten Polypeptide oder funktionelle, biologisch aktive Fragmente davon können mittels eines rekombinanten Verfahrens hergestellt werden, bei dem man einen Polypeptide-produzierenden Mikroorganismus kultiviert, gegebenenfalls die Expression der Polypeptide induziert und diese aus der Kultur isoliert. Die Polypeptide können so auch in großtechnischem Maßstab produziert werden, falls dies erwünscht ist. Der rekombinante Mikroorganismus kann nach bekannten Verfahren kultiviert und fermentiert werden. Baktenen können beispielsweise in TB- oder LB-Medium und bei einer Temperatur von 20 bis 40 °C und einem pH-Wert von 6 bis 9 vermehrt werden. Im Einzelnen werden geeignete Kultivierungsbedingungen beispielsweise in T. Maniatis, E. F. Fritsch and J. Sambrook, Molecular Cloning: A Laboratory Manual, Cold Spring Harbor Laboratory, Cold Spring Harbor, NY (1989) beschrieben.

Die Zellen werden dann, falls die Polypeptide nicht in das Kulturmedium sezemiert werden, aufgeschlossen und das Produkt nach bekannten Proteinisolierungsverfahren aus dem Lysat gewonnen. Die Zellen können wahlweise durch hochfrequenten Ultraschall, durch hohen Druck, wie z. B. in einer French-Druckzelle, durch Osmolyse, durch Einwirkung von Detergenzien, lytischen Enzymen oder organischen Lösungsmitteln, durch Homogenisatoren oder durch Kombination mehrerer der aufgeführten Verfahren aufgeschlossen werden.

Eine Aufreinigung der Polypeptide kann mit bekannten, chromatographischen Verfahren erzielt werden, wie Molekularsieb-Chromatographie (Gelfiltration), wie Q-Sepharose-Chromatographie, Ionenaustausch-Chromatographie und hydrophobe Chromatographie, sowie mit anderen üblichen Verfahren wie Ultrafiltration, Kristallisation, Aussalzen, Dialyse und nativer Gelelektrophorese. Geeignete Verfahren werden beispielsweise in Cooper, F. G., Biochemische Arbeitsmethoden, Verlag Walter de Gruyter, Berlin, New York oder in Scopes, R., Protein Purification, Springer Verlag, New York, Heidelberg, Berlin beschrieben.

Vorteilhaft kann es sein, zur Isolierung des rekombinanten Proteins Vektorsysteme oder Oligonukleotide zu verwenden, die die cDNA um bestimmte Nukleotidsequenzen verlängern und damit für veränderte Polypeptide oder Fusionsproteine kodieren, die beispielsweise einer einfacheren Reinigung dienen. Derartige geeignete Modifikationen umfassen als Anker fungierende sogenannte "Tags", wie beispielsweise die als Hexa-Histidin-Anker bekannte Modifikation oder Epitope, die als Antigene von Antikorpem erkannt werden können (beschrieben zum Beispiel in Harlow, E. and Lane, D., 1988, Antibodies: A Laboratory Manual. Cold Spring Harbor (N. Y.) Press). Weitere geeignete Tags sind z. B. HA, Calmodulin-BD, GST, MBD; Chitin-BD, Steptavidin-BD-Avi-Tag, Flag-Tag, T7 etc. Diese Anker können zur Anheftung der Proteine an einen festen Träger, wie z. B. einer Polymermatrix, dienen, die beispielsweise in einer Chromatographiesäule eingefüllt sein kann, oder an einer Mikrotiterplatte oder an einem sonstigen Träger verwendet werden kann. Die entsprechenden Reinigungsprotokolle sind von den kommerziellen Affinitats-Tag-Anbietem erhältlich.

Die wie beschrieben hergestellten Proteine können sowohl direkt als Fusionsproteine als auch nach Abspaltung und Abtrennung des Fusionspartners als "reine" Hydrophobine verwendet werden.

Wenn eine Abtrennung des Fusionspartners vorgesehen ist, empfiehlt es sich eine potentielle Spaltstelle (spezifische Erkennungsstelle für Proteasen) in das Fusionsprotein zwischen Hydrophobinteil und Fusionspartnerteil einzubauen. Als Spaltstelle geeignet sind insbesondere solche Peptidsequenzen geeignet, die ansonsten weder im Hydrophobinteil noch im Fusionspartnerteil vorkommen, was sich mit bioinformatischen Tools leicht ermitteln lässt. Besonders geeignet sind beispielsweise BrCN-Spaltung an Methionin, oder durch Protease vermittelte Spaltung mit Faktor Xa-, Enterokinase-, Thrombin-, TEV-Spaltung (Tobacca etch virus Protease).

Zur erfindungsgemäßen Verwendung von Hydrophobinen zur schmutzabweisenden Behandlung von harten Oberflächen können die Hydrophobine auch in Substanz verwendet werden. Bevorzugt werden die Hydrophobine aber als Formulierungen bzw. Zusammensetzungen in mindestens einem geeigneten Lösemittel eingesetzt.

Die Auswahl der Hydrophobine zur Ausführung der Erfindung ist nicht beschränkt. Es können ein Hydrophobin oder auch mehrere verschiedene eingesetzt werden. Der Fachmann trifft eine geeignete Auswahl. Beispielsweise können Fusionsproteine, wie beispielsweise yaad-Xa-dewA-his (SEQ ID NO: 19) oder yaad-Xa-rodA-his (SEQ ID NO. 21) eingesetzt werden.

Bei den Lösemitteln für Formulierungen kann es sich um Wasser und/oder organische Lösemittel handeln. Selbstverständlich können auch Lösemitelgemische eingesetzt werden. Die Art des Lösemittels richtet sich nach dem Hydrophobin, der Art der zu behandelnden Oberfläche sowie der Anwendung und wird vom Fachmann entsprechend gewählt. Für Haushaltsanwendungen werden im Allgemeinen Wasser oder wässrige Formulierungen bevorzugt. Bei Industrieanwendungen kommen sowohl wässrige wie auch nichtwässrige Formulierungen in Frage.

Bevorzugt handelt es sich bei dem Lösemittel um Wasser oder Gemische aus Wasser und mit Wasser mischbaren, organischen Lösemitteln. Beispiele derartiger organischer Lösemittel umfassen mit Wasser mischbare einwertige oder mehrwertige Alkohole, wie beispielsweise Methanol, Ethanol, n-Propanol, i-Propanol, Ethylenglykol, Propylenglykol oder Glycerin. Weiterhin kann es sich auch um Etheralkohole handeln. Beispiele umfassen Monoalkylether von (Poly)ethylen- oder (Poly)propylenglykolen wie Ethylenglykolmonabutylether. Art und Menge der wasserlöslichen, organischen Lösemittel werden vom Fachmann gewählt.

Zur Herstellung der erfindungsgemäß verwendeten Zusammensetzung können bevorzugt die bei der Synthese, Isolierung und/oder Reinigung der Hydrophobine erhaltenen wassngen Lösungen der Hydrophobine eingesetzt werden. Diese können je nach Reinheit noch Reste von Hilfsstoffen aus der Synthese enthalten. Selbstverständlich können die Hydrophobine aber auch zunächst als Substanz isoliert werden, beispielsweise durch Gefriertrocknen, und erst in einem zweiten Schritt formuliert werden.

Die Menge der Hydrophobine in der Formulierung kann vom Fachmann je nach der Art der Oberfläche und/oder der Anwendung bestimmt werden. Es sind aber schon relativ kleine Mengen ausreichend, um eine schmutzabweisende Wirkung zu erzielen. Bewährt hat sich eine Menge von 0,0001 bis 1 Gew.% bezüglich der Summe aller Bestandteile der Formulierung, ohne dass die Erfindung damit auf diesen Bereich beschränkt sein soll. Bevorzugt betragt die Menge von 0,0005 bis 0,5 Gew.% und besonders bevorzugt 0,001 bis 0,1 Gew.%.

Bevorzugt handelt es sich bei der verwendeten Zusammensetzung um ein Reinigungsmittel, wie beispielsweise Glasreiniger, Fußbodenreiniger, Allzweckreiniger, Badreiniger, Klarspüler, Geschirrspülmittel zur Hand- oder Maschinenreinigung von Geschirr, Maschinenreiniger, Metallentfetter, Hochdruckreiniger, alkalische Reiniger, saure Reiniger, Spitzenentfetter oder Molkereireiniger. Das erfindungsgemäße Reinigungsmittel umfasst neben einem Lösemittel und mindestens einem durch Proteinisolierungsverfahren aus dem Lysat gewonnenem Hydrophobin in prinzipiell bekannter Art und Weise eines oder mehrere Tenside in wirksamen Mengen.

Bei den Zusammensetzungen kann es sich auch um Vor- oder Nachbehandlungsmittel für harte Oberflächen, insbesondere für Glas, Keramik oder Fußböden handeln.

Bei den Tensiden kann es sich um anionische, nichtionische, amphotere und/oder kationische Tenside handeln. Derartige Tenside sowie deren jeweils bevorzugter Einsatzweck sind dem Fachmann prinzipiell bekannt.

Beispiele anionischer Tenside umfassen Fettalkoholsulfate, Alkylethersulfate, Alkansulfonate, Alkylbenzolsulfonate oder Alkylphosphate. Es können die freien Säuren oder Salze davon eingesetzt werden.

Beispiele nichtionischer Tenside umfassen alkoxylierte C₈-C₂₂-Alkohole wie Fettalkoholalkoxylate oder Oxoalkoholalkoxylate, Alkylphenolethoxylate mit C₆-C₁₄-Alkylketten und 5 bis 30 Mol Ethylenoxideinheiten, Alkylpolyglucoside mit 8 bis 22 in der Alkylkette, Alkylaminalkoxylate oder Alkylamidethoxylate.

Beispiele amphoterer Tenside umfassen Alkylbetaine, Alkylamidbetaine, Aminopropionate, Aminoglycinate oder amphotere Imidazoliumverbindungen.

Beispiele kationischer Tenside umfassen substituierte oder unsubstituierte, geradkettige oder verzweigte quartäre Ammoniumsalze, z.B. C₈₋₆-Dialkyldimethylammoniumhalogenide, Dialkoxydimethylammoniumhalogenide oder Imidazoliumsalze mit langkettigem Alkylrest.

Weitere Beispiele von Tensiden sind in DE-A 101 60 993, Abschnitten [0056] bis [0073] aufgeführt.

Der Fachmann trifft hinsichtlich von Art und Menge der Tensiden eine geeignete Auswahl. Bewährt hat sich eine Menge von 0,01 bis 30 Gew.% Tenside bezüglich der Summe aller Komponenten der Formulierung.

Die Formulierung kann optional darüber hinaus noch weitere Komponenten, beispielsweise Zusatzstoffe und/oder Hilfsmittel umfassen. Beispiele derartiger Komponenten umfassen Säuren oder Basen, beispielsweise Carbonsauren oder Ammoniak, Puffersysteme, Polymere, anorganische Partikel wie SiO₂ oder Silikate, Farbstoffe, Duftstoffe oder Biozide. Weitere Beispiele von Zusatzstoffen sind in DE-A 101 60 993, insbesondere Abschnitte [0074] bis [0131] aufgeführt. Der Fachmann trifft hinsichtlich der Art und Menge zusätzlicher Komponenten je nach der Anwendung eine geeignete Auswahl.

Erfindungsgemäß wird die schmutzabweisende Behandlung harter Oberflächen vorgenommen, indem man die harte Oberfläche mit einer Zusammensetzung umfassend mindestens ein Hydrophobin sowie mindestens ein Lösemittel in Kontakt bringt.

Das "In-Kontakt-Bringen" richtet sich nach der Art des Gegenstandes. Es kann beispielsweise durch Besprühen, Spülen oder Wischen der Oberfläche mit der Zusammensetzung erfolgen oder auch durch Eintauchen des gesamten Gegenstandes in die Formulierung. Letzteres ist naturgemäß nur bei nicht eingebauten Gegenständen moglich. Die Behandlungsdauer wird vom Fachmann festgelegt. Sie kann wenige Sekunden bis zu mehreren Stunden dauern. Die Oberfläche kann nach der Behandlung zur Entfernung überschüssiger Behandlungslösung nachgespült werden, beispielsweise mit Wasser.

Die schmutzabweisende Behandlung kann besonders vorteilhaft in Kombination mit einer Reinigung, d.h. im Zuge des eigentlichen Reinigungsvorganges selbst erfolgen. Hierzu wird ein Reinigungsmittel eingesetzt, welches wie oben beschrieben mindestens ein Hydrophobin, mindestens ein Tensid sowie mindestens ein Lösemittel umfasst.

Die Behandlung kann bei Temperaturen unterhalb von Raumtemperatur, bei Raumtemperatur oder bei erhöhten Temperaturen vorgenommen werden, beispielsweise bei 20 bis 100 °C, bevorzugt 20 bis 60 °C. Bevorzugt wird die Behandlung bei Temperaturen von nicht mehr als 30 °C vorgenommen, insbesondere 20 bis 30 °C.

Nach dem Behandeln mit der Zusammensetzung wird die behandelte Oberfläche getrocknet. Das Trocknen der behandelten Oberfläche kann, quasi von selbst, bei Raumtemperatur erfolgen, oder es kann auch bei erhöhten Temperaturen getrocknet werden.

An die Behandlung sowie ggf. das Trocknen der Oberfläche kann sich eine thermische Nachbehandlung der Oberfläche bei erhöhten Temperaturen, beispielsweise bei Temperaturen von bis zu 120 °C anschließen. Die thermische Nachbehandlung kann natürlich auch kombiniert mit der Trocknung vorgenommen werden. Bevorzugt betragen die Temperaturen bei einer thermischen Nachbehandlung 30 bis 100 °C, besonders bevorzugt 40 bis 80 °C und beispielsweise 50 bis 70 °C. Die Behandlungsdauer wird vom Fachmann festgelegt, sie kann beispielsweise von 1 min bis 10 h betragen.

Durch das erfindungsgemäße Verfahren ist eine harte Oberfläche erhältlich, die eine schmutzabweisende, mindestens ein Hydrophobin umfassende Beschichtung aufweist. Bei der Beschichtung handelt es sich in der Regel mindestens um eine monomolekulare Schicht des Hydrophobins auf der Oberfläche.

Die schmutzabweisende Wirkung kann mittels prinzipiell bekannter Methoden bestimmt werden, beispielsweise, indem man die Ablösbarkeit von Schmutz durch Abspülen mit Wasser von einer unbehandelten und einer mit Hydrophobinen behandelten Oberfläche vergleicht.

Die Hydrophobine weisen bereits in genngen Mengen eine deutliche Wirkung auf. Bereits die Behandlung mit einer nur 0.01 Gew.% Hydrophobine enthaltenden Zusammensetzung führt zu einer deutlich verbesserten Schmutzablosung.

Über die erfindungsgemäße, schmutzabweisende Behandlung hinaus kann auch noch eine deutliche Hydrophobierung der Oberfläche erreicht werden. Dies ist insbesondere in Feuchträumen, wie beispielsweise Badezimmern ein weiterer Vorteil.

Die folgenden Beispiele sollen die Erfindung naher erläutern:

### Teil A:

### Herstellung und Test der erfindungsgemäß verwendeten Hydrophobine

### Beispiel 1

### Vorarbeiten für die Klonierung von yaad-His₆/ yaaE-His₆

Mit Hilfe der Oligonukleotide Hal570 und Hal571 (Hal572 / Hal573) wurde eine Polymerase Kettenreaktion durchgeführt. Als Template DNA wurde genomische DNA des Bakteriums Bacillus subtilis verwendet. Das erhaltene PCR Fragment enthielt die codierende Sequenz des Gens yaaD / yaaE aus Bacillus subtilis, und an den Enden je eine Ncol bzw. Bglll Restriktionsschnittstelle. Das PCR Fragment wurde gereinigt und mit den Restnktionsendonukleasen Ncol und Bglll geschnitten. Dieses DNA Fragment wurde als Insert verwendet, und in den zuvor mit den Restriktionsendonukleasen NcoI und Bglll linearisierten Vektor pQE60 der Firma Qiagen kloniert. Die so entstandenen Vektoren pQE60YAAD#2 / pQE60YaaE#5 können zur Expression von Proteinen bestehend aus, YAAD::HIS₆ bzw. YAAE::HIS₆ verwendet werden.
Hal570: gcgcgcccatggctcaaacaggtactga
Hal571 gcagatctccagccgcgttcttgcatac
Hal572: ggccatgggattaacaataggtgtactagg
Hal573: gcagatcttacaagtgccttttgcttatattcc

### Beispiel 2

### Klonierung von yaad-Hydrophobin DewA-His₆

Mit Hilfe der Oligonukleotide KaM416 und KaM417 wurde eine Polymerase Kettenreaktion durchgeführt. Als Template DNA wurde genomische DNA des Schimmelpilzes Aspergillus nidulans verwendet. Das erhaltene PCR Fragment enthielt die codierende Sequenz des Hydrophobin Gens dewA und einer N-Terminalen Faktor Xa Proteinase Schnittstelle. Das PCR Fragment wurde gereinigt und mit der Restriktionsendonuklease BamHI geschnitten. Dieses DNA Fragment wurde als Insert verwendet, und in den zuvor mit der Restriktionsendonuklease Bglll linearisierten Vektor pQE60YAAD#2 kloniert.

Der so entstandene Vektor #508 kann zur Expression eines Fusionsproteins bestehend aus, YAAD: Xa: dewA : HIS₆ verwendet werden.
KaM416: GCAGCCCATCAGGGATCCCTCAGCCTTGGTACCAGCGC
KaM417: CCCGTAGCTAGTGGATCCATTGAAGGCCGCAT-GAAGTTCTCCGTCTCCGC

### Beispiel 3

### Klonierung von yaad-Hydrophobin RodA-His₆

Die Klonierung des Plasmids #513 erfolgte analog zu Plasmid #508 unter Verwendung der Oligonukleotide KaM434 und KaM435.
KaM434: GCTAAGCGGATCCATTGAAGGCCGCATGAAGTTCTCCATTGCTGC
KaM435: GCAATGGGGATCCGAGGATGGAGGCAAGGG

### Beispiel 4

### Klonierung von vaad-Hydrophobin BASF1-His₆

Die Klonierung des Plasmids #507 erfolgte analog zu Plasmid #508 unter Verwendung der Oligonukleotide KaM417 und KaM418.

Als Template DNA wurde eine künstlich synthetisierte DNA Sequenz - Hydrophobin BASF1 - eingesetzt (siehe Anhang).
KaM417 CCCGTAGCTAGTGGATCCATTGAAGGCCGCATGAAGTTCTCCGTCTCCG C
KaM418: CTGCCATTCAGGGGATCCCATATGGAGGAGGGAGACAG

### Beispiel 5

### Klonierung von yaad-Hydrophobin BASF2-His₆

Die Klonierung des Plasmids #506 erfolgte analog zu Plasmid #508 unter Verwendung der Oligonukleotide KaM417 und KaM418.

Als Template DNA wurde eine künstlich synthetisierte DNA Sequenz - Hydrophobin BASF2 - eingesetzt (siehe Anhang).
KaM417:CCCGTAGCTAGTGGATCCATTGAAGGGCGGATGAAGTTCTCCGTCTCCG C
KaM418 CTGCCATTCAGGGGATCCCATATGGAGGAGGGAGACAG

### Beispiel 6

### Klonierung von yaad-Hydrophobin SC3-His₆

Die Klonierung des Plasmids #526 erfolgte analog zu Plasmid #508 unter Verwendung der Oligonukleotide KaM464 und KaM465.

Als Template DNA wurde cDNA von Schyzophyllum commune eingesetzt (siehe Anhang).
KaM464: CGTTAAGGATCCGAGGATGTTGATGGGGGTGC
KaM465: GCTAACAGATCTATGTTCGCCCGTCTCCCCGTCGT

### Beispiel 7

### Fermentation des rekombinanten E.coli Stammes yaad-Hydrophobin DewA-His₆

Inokulation von 3 ml LB Flussigmedium mit einem yaad-Hydrophobin DewA-His₆ exprimierenden E. coli Stamm in 15 ml Greiner Röhrchen. Inkubation für 8 h bei 37°C auf einem Schüttler mit 200 UpM. Je 2x 11 Erlenmeyer Kolben mit Schikanen und 250 ml LB Medium (+100 µg/ml Ampicillin) werden mit jeweils 1 ml der Vorkultur angeimpft und 9 h bei 37°C auf einem Schüttler mit 180 UpM inkubiert. 13.5 ILB-Medium (+100 µg/ml Ampicillin) in einem 20 l Fermenter mit 0,5 l Vorkultur (OD₆₀₀ₙₘ 1:10 gegen H₂O gemessen) animpfen. Bei einer OD₆₀₀ₙₘ von -3.5 Zugabe von 140 ml 100 mM IPTG. Nach 3 h Fermenter auf 10°C abkühlen und Fermentationsbrühe abzentrifugieren. Zellpellet zur weiteren Aufreinigung verwenden.

### Beispiel 8

### Reinigung des rekombinanten Hydrohobin-Fusionsproteins

### (Reinigung von Hydrophobin-Fusionsproteinen, die ein C-terminales His6-tag besitzen)

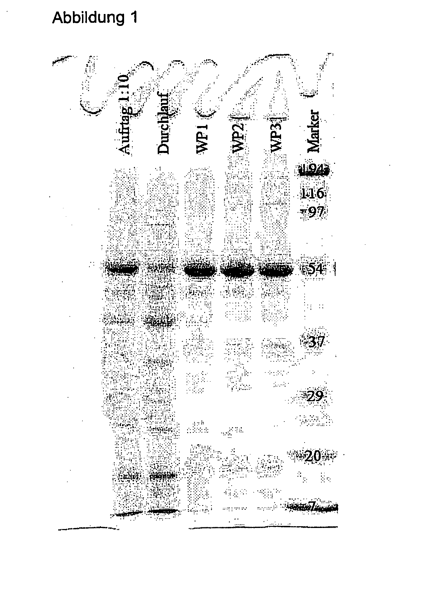

100 g Zellpellet (100-500 mg Hydrophobin) werden mit 50 mM Natriumphosphatpuffer, pH 7,5 auf 200 ml Gesamtvolumen aufgefullt und resuspendiert. Die Suspension wird mit einem Ultraturrax Typ T25 (Janke und Kunkel, IKA-Labortechnik) für 10 min behandelt und anschließend für 1 h bei Raumtemperatur mit 500 Einheiten Benzonase (Merck, Darmstadt; Best.-Nr. 1.01697.0001) zum Abbau der Nukleinsäuren inkubiert. Vor dem Zellaufschluss wird mit einer Glaskartusche (P1) filtriert. Zum Zellaufschluss und für das Scheren der restlichen genomischen DNA werden zwei Homogenisatorläufe bei 1.500 bar durchgeführt (Microfluidizer M-110EH; Microfluidics Corp.). Das Homogenisat wird zentrifugiert (Sorvall RC-5B, GSA-Rotor, 250 ml Zentrifugenbecher, 60 min, 4°C, 12.000 Upm, 23.000 g), der Überstand auf Eis gestellt und das Pellet in 100 ml Natriumphosphatpuffer, pH 7,5 resuspendiert. Zentrifugation und Resuspendieren werden dreimal wiederholt, wobei der Natriumphosphatpuffer bei der dritten Wiederholung 1 % SDS enthält. Nach der Resuspension wird für eine Stunde gerührt und eine abschließende Zentrifugation durchgeführt (Sorvall RC-5B, GSA-Rotor, 250 ml Zentrifugenbecher, 60 min, 4°C, 12.000 Upm, 23.000 g). Gemäß SDS-PAGE Analyse ist das Hydrophobin nach der abschließenden Zentnfugation im Überstand enthalten (Abbildung 1). Die Versuche zeigten, dass das Hydrophobin wahrscheinlich in Form von Einschlusskörpern in den entsprechenden E. coli Zellen enthalten ist. 50 ml des Hydrophobin-enthaltenden Überstandes werden auf eine 50 ml Nickel-Sepharose High Performance 17-5268-02 Säule aufgetragen (Amersham), die mit 50 mM Tris-Cl pH 8,0 Puffer äquilibriert wurde. Die Säule wird mit 50 mM Tris-Cl pH 8,0 Puffer gewaschen und das Hydrophobin anschließend mit 50 mM Tris-Cl pH 8,0 Puffer, der 200 mM Imidazol enthält, eluiert. Zur Entfernung des Imidazols wird die Lösung gegen 50 mM Tris-Cl pH 8,0 Puffer dialysiert.

Abbildung 1 zeigt die Reinigung des hergestellten Hydrophobins:

| | |
|---|---|
| Spur 1. | Auftrag Nickel-Sepharose Säule (1.10 Verdünnung) |
| Spur 2: | Durchlauf = Eluat Waschschritt |
| Spuren 3-5: | OD₂₈₀ Maxima der Elutionsfraktionen |

Das Hydrophobin der Abbildung 1 besitzt ein Molekulargewicht von ca. 53 kD. Die kleineren Banden repräsentieren zum Teil Abbauprodukte des Hydrophobins.

### Beispiel 9

### Technische Prüfung: Charakterisierung des Hydrophobins durch Kontaktwinkeländerung eines Wassertropfens auf Glas

### Substrat:

Glas (Fensterglas, Suddeutsche Glas, Mannheim):
Konzentration Hydrophobin: 100 µg/mL
Inkubation von Glasplättchen über Nacht (Temperatur 80 °C) in 50 mM Na-Acetat pH 4+0,1% Tween 20
danach Beschichtung waschen in destilliertem Wasser
danach Inkubation 10 min / 80 °C /1% SDS-Lösung in dest. Wasser Waschen in dest. Wasser

Die Proben werden an der Luft getrocknet und der Kontaktwinkel (in Grad) eines Tropfens von 5 µl Wasser bestimmt.

Die Kontaktwinkelmessung wurde auf einem Gerät Dataphysics Contact Angle System OCA 15+, Software SCA 20.2.0. (November 2002) bestimmt. Die Messung erfolgte gemäss den Herstellerangaben.

Unbehandeltes Glas ergab einen Kontaktwinkel von 30 ± 5°, eine Beschichtung mit dem funktionellen Hydrophobin gemäss Beispiel 8 (yaad-dewA-his₆) ergab Kontaktwinkel von 75 ± 5°.

### Teil B:

### Verwendung der Hydrophobine zur schmutzabweisenden Beschichtung von harten Oberflächen

### Verwendete Lösung:

Für die anwendungstechnischen Versuche wurde eine Lösung des gemäß Beispiel 8 hergestellten Fusionsproteins yaad-Xa-dewA-his (SEQ ID NO: 19) in Wasser eingesetzt. Konzentration des Hydrophobins in Lösung: 100 µg/ml (0,01 Gew.%).

### Verwendete harte Oberfläche:

Keramikfliese, weiss glänzend, 10 cm x 15 cm (Fa. Novocker), mit Ethanol und Wasser abgewischt.

### Verwendeter Schmutz:

Für die Tests wurde IKW-Ballastschmutz verwendet (gemäß Seifen, Fette, Öle, Wachse (SÖFW) -Journal, 124. Jg., 14/98, S. 1029)

### Durchführung der Behandlung

Auf eine Fliese wurden 2 g der oben erwähnten, wässrigen Hydrophobinlösung mit einer Konzentration von 100 µg/ml aufgetropft (1,3 µm Hydrophobin/cm²) und mit einem Tuch leicht verrieben, so dass die gesamte Oberfläche bedeckt war. Die Fliese wurde daraufhin liegend für 24 h an Luft getrocknet.

Anschließend wurde die Fliese mit Wasser abgespült und für 3x 10 min in ein Becherglas mit Wasser gestellt. Für jedes Spülen wurde frisches Wasser verwendet. Die Fliese wurde dann stehend an Luft getrocknet.

### Kontaktwinkelmessung und schmutzabweisende Wirkung

Auf der behandelten Fliese wurde mit einem Wassertropfen ein Kontaktwinkel von 56° gemessen (Mittelwert aus 10 Messungen). Eine unbehandelte Fliese im Vergleich zeigt einen Kontaktwinkel von 20°. Die Fliese wurde also deutlich hydrophobiert.

Auf die behandelte Fliese und zum Vergleich auch auf eine unbehandelte wurden mit einer Transferpipette jeweils 50, 100 und 200 µg IKW-Ballastschmutz punktförmig aufgetragen und für 1 h bei Raumtemperatur getrocknet.

Die Fliesen wurden dann 3x mit jeweils 500 ml Wasser gespült. Während sich von der unbehandelten Oberfläche der Schmutz dabei nicht ablöste, konnte von der mit Hydrophobin vorbehandelten Kachel eine teilweise Schmutzablösung beobachtet werden.

Die Vorbehandlung mit Hydrophobin führte somit zu einer geringeren Schmutzhaftung.

## Patentansprüche

1. Verwendung von Hydrophobinen zur schmutzabweisenden Behandlung von harten Oberflächen.

2. Verwendung gemäß Anspruch 1, **dadurch gekennzeichnet, dass** die schmutzabweisende Behandlung in Kombination mit einer Reinigung der Oberfläche vorgenommen wird.

3. Verwendung gemäß Anspruch 2, **dadurch gekennzeichnet, dass** man zur Behandlung ein Reinigungsmittel umfassend mindestens ein Hydrophobin, ein Tensid sowie ein Losemittel einsetzt.

4. Verfahren zur schmutzabweisenden Behandlung harter Oberflächen, **dadurch gekennzeichnet, dass** man die Oberfläche mit einer Zusammensetzung umfassend mindestens ein Hydrophobin sowie ein Lösemittel in Kontakt bringt.

5. Verfahren gemäß Anspruch 4, **dadurch gekennzeichnet, dass** es sich bei der Zusammensetzung um ein Reinigungsmittel umfassend mindestens ein Hydrophobin, ein Tensid sowie ein Lösemittel handelt.

6. Verfahren gemäß Anspruch 4 oder 5, **dadurch gekennzeichnet, dass** die Menge der Hydrophobine in der Zusammensetzung 0,0001 bis 1 Gew. % bezüglich der Summe aller Bestandteile der Zusammensetzung beträgt.

7. Verfahren gemäß einem der Ansprüche 4 bis 6, **dadurch gekennzeichnet, dass** man die Behandlung bei Temperaturen unterhalb von 30°C vornimmt.

8. Verfahren gemäß einem der Ansprüche 4 bis 7, **dadurch gekennzeichnet, dass** es sich bei den Hydrophobinen um mindestens ein Fusions-Hydrophobin handelt.

9. Verfahren gemäß einem der Ansprüche 4 bis 8, **dadurch gekennzeichnet, dass** es sich bei der Oberfläche um im Haushalt vorkommende Oberflächen handelt.

10. Verfahren gemäß Anspruch 9, **dadurch gekennzeichnet, dass** es sich bei der harten Oberfläche um eine ausgewählt aus der Gruppe der Oberflächen von Fußböden, Armaturen, Waschbecken, Duschwannen, Badewannen, Toiletten, Duschkabinen, Badezimmermöbeln, Möbeln, Spiegeln, Geschirr, Besteck, Gläsern, oder die Oberflächen von Haushaltsgeräten handelt.

11. Reinigungsmittel für harte Oberflächen **dadurch gekennzeichnet, dass** das Reinigungsmittel mindestens ein durch Proteinisolierungsverfahren aus dem Lysat gewonnenes Hydrophobin, mindestens ein Tensid sowie ein Lösemittel umfasst.

12. Reinigungsmittel gemäß Anspruch 11, **dadurch gekennzeichnet, dass** es sich bei mindestens einem der Lösemittel um Wasser handelt.

13. Reinigungsmittel gemäß Anspruch 11 oder 12, **dadurch gekennzeichnet, dass** die Menge der Hydrophobine 0,0001 bis 1 Gew % bezüglich der Summe aller Bestandteile des Reinigungsmittels beträgt.

14. Reinigungsmittel gemäß Anspruch 11 oder 12, **dadurch gekennzeichnet, dass** die Menge der Hydrophobine 0,001 bis 0,1 Gew. % bezüglich der Summe aller Bestandteile des Reinigungsmittels beträgt.

15. Reinigungsmittel gemäß einem der Ansprüche 11 bis 14, **dadurch gekennzeichnet, dass** es sich bei den durch Proteinisolierungsverfahren aus dem Lysat gewonnenen Hydrophobinen um mindestens ein Fusions-Hydrophobin handelt.

16. Harte Oberfläche, umfassend eine schmutzabweisende Beschichtung, **dadurch gekennzeichnet, dass** die Beschichtung mindestens ein Hydrophobin umfasst, und dass es sich bei der harten Oberfläche um eine ausgewählt aus der Gruppe der Oberflächen von Fußböden, Armaturen, Waschbecken, Duschwannen, Badewannen, Toiletten, Duschkabinen, Badezimmermöbeln, Möbeln, Spiegeln, Geschirr, Besteck, Gläsern, oder die Oberflächen von Haushaltsgeräten handelt.

17. Harte Oberfläche gemäß Anspruch 16, **dadurch gekennzeichnet, dass** die Oberfläche durch ein Verfahren gemäß einem der Ansprüche 4 bis 9 erhältlich ist.

## Claims

1. The use of a hydrophobin for soil-repellently treating a hard surface.

2. The use according to claim 1 wherein said soil-repellently treating is effected in combination with a cleansing of said surface.

3. The use according to claim 2 wherein said treating is effected using a cleansing agent comprising at least one hydrophobin, a surfactant and also a solvent.

4. A process for soil-repellently treating a hard surface, which comprises contacting said surface with a composition comprising at least one hydrophobin and also a solvent.

5. The process according to claim 4 wherein said composition comprises a cleansing agent comprising at least one hydrophobin, a surfactant and also a solvent.

6. The process according to claim 4 or 5 wherein the amount of hydrophobin in said composition is in the range from 0.0001% to 1% by weight based on the sum total of all constituents of said composition.

7. The process according to any one of the claims 4 to 6 wherein said treating is effected at temperatures below 30°C.

8. The process according to any one of the claims 4 to 7 wherein said hydrophobin comprises at least one fusion hydrophobin.

9. The process according to any one of the claims 4 to 8 wherein said surface comprises a household surface.

10. The process according to claim 9 wherein said hard surface comprises a hard surface selected from the group of surfaces of floors, fittings, basins, shower baths, bath tubs, toilets, shower cabins, bathroom furniture, furniture, mirrors, dishware, cutlery, glasses, or the surfaces of household appliances.

11. A cleansing agent for a hard surface comprising at least one hydrophobin obtained from the lysate by protein isolation processes, at least one surfactant and also a solvent.

12. The cleansing agent according to claim 11 wherein at least one solvent comprises water.

13. The cleansing agent according to claim 11 or 12 wherein the amount of hydrophobin is in the range from 0.0001% to 1% by weight based on the sum total of all constituents of the cleansing agent.

14. The cleansing agent according to claim 11 or 12 wherein the amount of hydrophobin is in the range from 0,001% to 0.1% by weight based on the sum total of all constituents of the cleansing agent.

15. The cleansing agent according to any one of the claims 11 to 14 wherein said hydrophobin obtained from the lysate by protein isolation processes comprises at least one fusion hydrophobin.

16. A hard surface comprising a soil-repellent coating comprising at least one hydrophobin and wherein said hard surface is a hard surface selected from the group of surfaces of floors, fittings, basins, shower baths, bath tubs, toilets, shower cabins, bathroom furniture, furniture, mirrors, dishware, cutlery, glasses, or the surfaces of household appliances.

17. The hard surface according to claim 16 obtainable by a process according to any one of the claims 4 to 9.

## Revendications

1. Utilisation d'hydrophobines pour le traitement antitache de surfaces dures.

2. Utilisation selon la revendication 1, **caractérisée en ce que** le traitement antitache est réalisé en combinaison avec un nettoyage de la surface.

3. Utilisation selon la revendication 2, **caractérisée en ce qu'**un agent de nettoyage comprenant au moins une hydrophobine, un tensioactif et un solvant est utilisé pour le traitement.

4. Procédé de traitement antitache de surfaces dures, **caractérisé en ce que** la surface est mise en contact avec une composition comprenant au moins une hydrophobine et un solvant.

5. Procédé selon la revendication 4, **caractérisé en ce que** la composition est un agent de nettoyage comprenant au moins une hydrophobine, un tensioactif et un solvant.

6. Procédé selon la revendication 4 ou 5, **caractérisé en ce que** la quantité des hydrophobines dans la composition est de 0,0001 à 1 % en poids par rapport à la somme de tous les autres constituants de la composition.

7. Procédé selon l'une quelconque des revendications 4 à 6, **caractérisé en ce que** le traitement est réalisé à des températures inférieures à 30 °C.

8. Procédé selon l'une quelconque des revendications 4 à 7, **caractérisé en ce que** les hydrophobines sont au moins une hydrophobine de fusion.

9. Procédé selon l'une quelconque des revendications 4 à 8, **caractérisé en ce que** la surface désigne des surfaces trouvées dans le domaine ménager.

10. Procédé selon la revendication 9, **caractérisé en ce que** la surface dure est choisie dans le groupe des surfaces de planchers, de robinetteries, de lavabos, de bacs à douche, de baignoires, de toilettes, de cabines de douche, de meubles pour salle de bain, de meubles, de miroirs, de couverts, de verres, ou des surfaces d'appareils ménagers.

11. Agent de nettoyage pour surfaces dures, **caractérisé en ce que** l'agent de nettoyage comprend au moins une hydrophobine obtenue par des procédés d'isolement de protéines à partir du lysat, au moins un tensioactif et un solvant.

12. Agent de nettoyage selon la revendication 11, **caractérisé en ce qu'**au moins un des solvants est l'eau.

13. Agent de nettoyage selon la revendication 11 ou 12, **caractérisé en ce que** la quantité des hydrophobines est de 0,0001 à 1 % en poids par rapport à la somme de tous les constituants de l'agent de nettoyage.

14. Agent de nettoyage selon la revendication 11 ou 12, **caractérisé en ce que** la quantité des hydrophobines est de 0,001 à 0,1 % en poids par rapport à la somme de tous les constituants de l'agent de nettoyage.

15. Agent de nettoyage selon l'une quelconque des revendications 11 à 14, **caractérisé en ce que** les hydrophobines obtenues par des procédés d'isolement de protéines à partir du lysat sont au moins une hydrophobine de fusion.

16. Surface dure, comprenant un revêtement antitache, **caractérisée en ce que** le revêtement comprend au moins une hydrophobine, et **en ce que** la surface dure est choisie dans le groupe des surfaces de planchers, de robinetteries, de lavabos, de bacs à douche, de baignoires, de toilettes, de cabines de douche, de meubles pour salle de bain, de meubles, de miroirs, de couverts, de verres, ou des surfaces d'appareils ménagers.

17. Surface dure selon la revendication 16, **caractérisée en ce que** la surface peut être obtenue par un procédé selon l'une quelconque des revendications 4 à 9.


### SEQUENCE LISTING

<210> SEQ ID NO:1
<211> 405
<212> DNA
<213> Aspergillus nidulans
<220>
<221> CDS
<222> (1)..(405)
<223>
<400> 1
   atg cgc ttc atc gtc tct ctc ctc gcc ttc act gcc gcg gcc acc gcg        48
   Met Arg Phe Ile Val Ser Leu Leu Ala Phe Thr Ala Ala Ala Thr Ala
   1               5                   10                  15
   acc gcc ctc ccg gcc tct gcc gca aag aac gcg aag ctg gcc acc tcg        96
   Thr Ala Leu Pro Ala Ser Ala Ala Lys Asn Ala Lys Leu Ala Thr Ser
               20                  25                  30
   gcg gcc ttc gcc aag cag gct gaa ggc acc acc tgc aat gtc ggc tcg       144
   Ala Ala Phe Ala Lys Gln Ala Glu Gly Thr Thr Cys Asn Val Gly Ser
           35                  40                  45
   atc gct tgc tgc aac tcc ccc gct gag acc aac aac gac agt ctg ttg       192
   Ile Ala Cys Cys Asn Ser Pro Ala Glu Thr Asn Asn Asp Ser Leu Leu
       50                  55                  60
   agc ggt ctg ctc ggt gct ggc ctt ctc aac ggg ctc tcg ggc aac act       240
   Ser Gly Leu Leu Gly Ala Gly Leu Leu Asn Gly Leu Ser Gly Asn Thr
   65                  70                  75                  80
   ggc agc gcc tgc gcc aag gcg agc ttg att gac cag ctg ggt ctg ctc        288
   Gly Ser Ala Cys Ala Lys Ala Ser Leu Ile Asp Gln Leu Gly Leu Leu
                   85                  90                  95
   gct ctc gtc gac cac act gag gaa ggc ccc gtc tgc aag aac atc gtc        336
   Ala Leu Val Asp His Thr Glu Glu Gly Pro Val Cys Lys Asn Ile Val
               100                 105                 110
   gct tgc tgc cct gag gga acc acc aac tgt gtt gcc gtc gac aac gct        384
   Ala Cys Cys Pro Glu Gly Thr Thr Asn Cys Val Ala Val Asp Asn Ala
           115                 120                 125
   ggc gct ggt acc aag gct gag                                            405
   Gly Ala Gly Thr Lys Ala Glu
       130                 135
<210> SEQ ID NO:2
<211> 135
<212> PRT
<213> Aspergillus nidulans
<400> 2
   Met Arg Phe Ile Val Ser Leu Leu Ala Phe Thr Ala Ala Ala Thr Ala
   1               5                   10                  15
   Thr Ala Leu Pro Ala Ser Ala Ala Lys Asn Ala Lys Leu Ala Thr Ser
               20                  25                  30
   Ala Ala Phe Ala Lys Gln Ala Glu Gly Thr Thr Cys Asn Val Gly Ser
           35                  40                  45
   Ile Ala Cys Cys Asn Ser Pro Ala Glu Thr Asn Asn Asp Ser Leu Leu
       50                  55                  60
   Ser Gly Leu Leu Gly Ala Gly Leu Leu Asn Gly Leu Ser Gly Asn Thr
   65                  70                  75                  80
   Gly Ser Ala Cys Ala Lys Ala Ser Leu Ile Asp Gln Leu Gly Leu Leu
                   85                  90                  95
   Ala Leu Val Asp His Thr Glu Glu Gly Pro Val Cys Lys Asn Ile Val
               100                 105                 110
   Ala Cys Cys Pro Glu Gly Thr Thr Asn Cys Val Ala Val Asp Asn Ala
           115                 120                 125
   Gly Ala Gly Thr Lys Ala Glu
       130                 135
<210> SEQ ID NO:3
<211> 471
<212> DNA
<213> Aspergillus nidulans
<220>
<221> CDS
<222> (1)..(471)
<223>
<400> 3
   atg aag ttc tcc att gct gcc gct gtc gtt gct ttc gcc gcc tcc gtc        48
   Met Lys Phe Ser Ile Ala Ala Ala Val Val Ala Phe Ala Ala Ser Val
   1               5                   10                  15
   gcg gcc ctc cct cct gcc cat gat tcc cag ttc gct ggc aat ggt gtt        96
   Ala Ala Leu Pro Pro Ala His Asp Ser Gln Phe Ala Gly Asn Gly Val
               20                  25                  30
   ggc aac aag ggc aac agc aac gtc aag ttc cct gtc ccc gaa aac gtg       144
   Gly Asn Lys Gly Asn Ser Asn Val Lys Phe Pro Val Pro Glu Asn Val
           35                  40                  45
   acc gtc aag cag gcc tcc gac aag tgc ggt gac cag gcc cag ctc tct       192
   Thr Val Lys Gln Ala Ser Asp Lys Cys Gly Asp Gln Ala Gln Leu Ser
       50                  55                  60
   tgc tgc aac aag gcc acg tac gcc ggt gac acc aca acc gtt gat gag       240
   Cys Cys Asn Lys Ala Thr Tyr Ala Gly Asp Thr Thr Thr Val Asp Glu
   65                  70                  75                  80
   ggt ctt ctg tct ggt gcc ctc agc ggc ctc atc ggc gcc ggg tct ggt       288
   Gly Leu Leu Ser Gly Ala Leu Ser Gly Leu Ile Gly Ala Gly Ser Gly
                   85                  90                  95
   gcc gaa ggt ctt ggt ctc ttc gat cag tgc tcc aag ctt gat gtt gct       336
   Ala Glu Gly Leu Gly Leu Phe Asp Gln Cys Ser Lys Leu Asp Val Ala
               100                 105                 110
   gtc ctc att ggc atc caa gat ctt gtc aac cag aag tgc aag caa aac       384
   Val Leu Ile Gly Ile Gln Asp Leu Val Asn Gln Lys Cys Lys Gln Asn
           115                 120                 125
   att gcc tgc tgc cag aac tcc ccc tcc agc gcg gat ggc aac ctt att       432
   Ile Ala Cys Cys Gln Asn Ser Pro Ser Ser Ala Asp Gly Asn Leu Ile
       130                 135                 140
   ggt gtc ggt ctc cct tgc gtt gcc ctt ggc tcc atc ctc                   471
   Gly Val Gly Leu Pro Cys Val Ala Leu Gly Ser Ile Leu
   145                 150                 155
<210> SEQ ID NO:4
<211> 157
<212> PRT
<213> Aspergillus nidulans
<400> 4
   Met Lys Phe Ser Ile Ala Ala Ala Val Val Ala Phe Ala Ala Ser Val
   1               5                   10                  15
   Ala Ala Leu Pro Pro Ala His Asp Ser Gln Phe Ala Gly Asn Gly Val
               20                  25                  30
   Gly Asn Lys Gly Asn Ser Asn Val Lys Phe Pro Val Pro Glu Asn Val
           35                  40                  45
   Thr Val Lys Gln Ala Ser Asp Lys Cys Gly Asp Gln Ala Gln Leu Ser
       50                  55                  60
   Cys Cys Asn Lys Ala Thr Tyr Ala Gly Asp Thr Thr Thr Val Asp Glu
   65                  70                  75                  80
   Gly Leu Leu Ser Gly Ala Leu Ser Gly Leu Ile Gly Ala Gly Ser Gly
                   85                  90                  95
   Ala Glu Gly Leu Gly Leu Phe Asp Gln Cys Ser Lys Leu Asp Val Ala
               100                 105                 110
   Val Leu Ile Gly Ile Gln Asp Leu Val Asn Gln Lys Cys Lys Gln Asn
           115                 120                 125
   Ile Ala Cys Cys Gln Asn Ser Pro Ser Ser Ala Asp Gly Asn Leu Ile
       130                 135                 140
   Gly Val Gly Leu Pro Cys Val Ala Leu Gly Ser Ile Leu
   145                 150                 155
<210> SEQ ID NO:5
<211> 336
<212> DNA
<213> unknown
<220> CDS
<221> CDS
<222> (1)..(336)
<223> hydrophobin sequence with characteristic cysteine-pattern
<400> 5
   atg atc tct cgc gtc ctt gtc gct gct ctc gtc gct ctc ccc gct ctt      48
   Met Ile Ser Arg Val Leu Val Ala Ala Leu Val Ala Leu Pro Ala Leu
   1               5                   10                  15
   gtt act gca act cct gct ccc gga aag cct aaa gcc agc agt cag tgc      96
   Val Thr Ala Thr Pro Ala Pro Gly Lys Pro Lys Ala Ser Ser Gln Cys
               20                  25                  30
   gac gtc ggt gaa atc cat tgc tgt gac act cag cag act ccc gac cac     144
   Asp Val Gly Glu Ile His Cys Cys Asp Thr Gln Gln Thr Pro Asp His
           35                  40                  45
   acc agc gcc gcc gcg tct ggt ttg ctt ggt gtt ccc atc aac ctt ggt     192
   Thr Ser Ala Ala Ala Ser Gly Leu Leu Gly Val Pro Ile Asn Leu Gly
       50                  55                  60
   gct ttc ctc ggt ttc gac tgt acc ccc att tcc gtc ctt ggc gtc ggt     240
   Ala Phe Leu Gly Phe Asp Cys Thr Pro Ile Ser Val Leu Gly Val Gly
   65                  70                  75                  80
   ggc aac aac tgt gct gct cag cct gtc tgc tgc aca gga aat caa ttc     288
   Gly Asn Asn Cys Ala Ala Gln Pro Val Cys Cys Thr Gly Asn Gln Phe
                   85                  90                  95
   acc gca ttg att aac gct ctt gac tgc tct cct gtc aat gtc aac ctc     336
   Thr Ala Leu Ile Asn Ala Leu Asp Cys Ser Pro Val Asn Val Asn Leu
               100                 105                 110
<210> SEQ ID NO:6
<211> 112
<212> PRT
<213> unknown
<220>
**·**
<223> Hydrophobin sequence with characteristic cysteine-pattern
<400> 6
   Met Ile Ser Arg Val Leu Val Ala Ala Leu Val Ala Leu Pro Ala Leu
   1               5                   10                  15
   Val Thr Ala Thr Pro Ala Pro Gly Lys Pro Lys Ala Ser Ser Gln Cys
               20                  25                  30
   Asp Val Gly Glu Ile His Cys Cys Asp Thr Gln Gln Thr Pro Asp His
           35                  40                  45
   Thr Ser Ala Ala Ala Ser Gly Leu Leu Gly Val Pro Ile Asn Leu Gly
       50                  55                      60
   Ala Phe Leu Gly Phe Asp Cys Thr Pro Ile Ser Val Leu Gly Val Gly
   65                  70                  75                  80
   Gly Asn Asn Cys Ala Ala Gln Pro Val Cys Cys Thr Gly Asn Gln Phe
                   85                  90                  95
   Thr Ala Leu Ile Asn Ala Leu Asp Cys Ser Pro Val Asn Val Asn Leu
               100                 105                 110
<210> SEQ ID NO:7
<211> 357
<212> DNA
<213> unknown
<220> CDS
<221> CDS
<222> (1)..(357)
<223> <220>
<223> hydrophobin sequence with characteristic cysteine-pattern
<400> 7
   atg gtc agc acg ttc atc act gtc gca aag acc ctt ctc gtc gcg ctc        48
   Met Val Ser Thr Phe Ile Thr Val Ala Lys Thr Leu Leu Val Ala Leu
   1               5                   10                  15
   ctc ttc gtc aat atc aat atc gtc gtt ggt act gca act acc ggc aag        96
   Leu Phe Val Asn Ile Asn Ile Val Val Gly Thr Ala Thr Thr Gly Lys
               20                  25                  30
   cat tgt agc acc ggt cct atc gag tgc tgc aag cag gtc atg gat tct       144
   His Cys Ser Thr Gly Pro Ile Glu Cys Cys Lys Gln Val Met Asp Ser
           35                  40                  45
   aag agc cct cag gct acg gag ctt ctt acg aag aat ggc ctt ggc ctg       192
   Lys Ser Pro Gln Ala Thr Glu Leu Leu Thr Lys Asn Gly Leu Gly Leu
       50                  55                  60
   ggt gtc ctt gct ggc gtg aag ggt ctt gtt ggc gcg aat tgc agc cct       240
   Gly Val Leu Ala Gly Val Lys Gly Leu Val Gly Ala Asn Cys Ser Pro
   65                  70                  75                  80
   atc acg gca att ggt att ggc tcc ggc agc caa tgc tct ggc cag acc       288
   Ile Thr Ala Ile Gly Ile Gly Ser Gly Ser Gln Cys Ser Gly Gln Thr
                   85                  90                  95
   gtt tgc tgc cag aat aat aat ttc aac ggt gtt gtc gct att ggt tgc       336
   Val Cys Cys Gln Asn Asn Asn Phe Asn Gly Val Val Ala Ile Gly Cys
               100                 105                 110
   act ccc att aat gcc aat gtg                                           357
   Thr Pro Ile Asn Ala Asn Val
           115
<210> SEQ ID NO:8
<211> 119
<212> PRT
<213> unknown
<220>
<223> hydrophobin sequence with characteristic cysteine-pattern
<400> 8
   Met Val Ser Thr Phe Ile Thr Val Ala Lys Thr Leu Leu Val Ala Leu
   1               5                   10                  15
   Leu Phe Val Asn Ile Asn Ile Val Val Gly Thr Ala Thr Thr Gly Lys
               20                  25                  30
   His Cys Ser Thr Gly Pro Ile Glu Cys Cys Lys Gln Val Met Asp Ser
           35                  40                  45
   Lys Ser Pro Gln Ala Thr Glu Leu Leu Thr Lys Asn Gly Leu Gly Leu
       50                  55                  60
   Gly Val Leu Ala Gly Val Lys Gly Leu Val Gly Ala Asn Cys Ser Pro
   65                  70                  75                  80
   Ile Thr Ala Ile Gly Ile Gly Ser Gly Ser Gln Cys Ser Gly Gln Thr
                   85                  90                  95
   Val Cys Cys Gln Asn Asn Asn Phe Asn Gly Val Val Ala Ile Gly Cys
               100                 105                 110
   Thr Pro Ile Asn Ala Asn Val
           115
<210> SEQ ID NO:9
<211> 408
<212> DNA
<213> Schizophyllum communae
<220>
<221> CDS
<222> (1)..(408)
<223>
<400> 9
   atg ttc gcc cgt ctc ccc gtc gtg ttc ctc tac gcc ttc gtc gcg ttc     48
   Met Phe Ala Arg Leu Pro Val Val Phe Leu Tyr Ala Phe Val Ala Phe
   1               5                   10                  15
   ggc gcc ctc gtc gct gcc ctc cca ggt ggc cac ccg ggc acg acc acg     96
   Gly Ala Leu Val Ala Ala Leu Pro Gly Gly His Pro Gly Thr Thr Thr
               20                  25                  30
   ccg ccg gtt acg acg acg gtg acg gtg acc acg ccg ccc tcg acg acg    144
   Pro Pro Val Thr Thr Thr Val Thr Val Thr Thr Pro Pro Ser Thr Thr
           35                  40                  45
   acc atc gcc gcc ggt ggc acg tgt act acg ggg tcg ctc tct tgc tgc    192
   Thr Ile Ala Ala Gly Gly Thr Cys Thr Thr Gly Ser Leu Ser Cys Cys
       50                  55                  60
   aac cag gtt caa tcg gcg agc agc agc cct gtt acc gcc ctc ctc ggc    240
   Asn Gln Val Gln Ser Ala Ser Ser Ser Pro Val Thr Ala Leu Leu Gly
   65                  70                  75                  80
   ctg ctc ggc att gtc ctc agc gac ctc aac gtt ctc gtt ggc atc agc    288
   Leu Leu Gly Ile Val Leu Ser Asp Leu Asn Val Leu Val Gly Ile Ser
                   85                  90                  95
   tgc tct ccc ctc act gtc atc ggt gtc gga ggc agc ggc tgt tcg gcg    336
   Cys Ser Pro Leu Thr Val Ile Gly Val Gly Gly Ser Gly Cys Ser Ala
               100                 105                 110
   cag acc gtc tgc tgc gaa aac acc caa ttc aac ggg ctg atc aac atc    384
   Gln Thr Val Cys Cys Glu Asn Thr Gln Phe Asn Gly Leu Ile Asn Ile
           115                 120                 125
   ggt tgc acc ccc atc aac atc ctc                                    408
   Gly Cys Thr Pro Ile Asn Ile Leu
       130                 135
<210> SEQ ID NO:10
<211> 136
<212> PRT
<213> Schizophyllum communae
<400> 10
   Met Phe Ala Arg Leu Pro Val Val Phe Leu Tyr Ala Phe Val Ala Phe
   1               5                   10                  15
   Gly Ala Leu Val Ala Ala Leu Pro Gly Gly His Pro Gly Thr Thr Thr
               20                  25                  30
   Pro Pro Val Thr Thr Thr Val Thr Val Thr Thr Pro Pro Ser Thr Thr
           35                  40                  45
   Thr Ile Ala Ala Gly Gly Thr Cys Thr Thr Gly Ser Leu Ser Cys Cys
       50                  55                  60
   Asn Gln Val Gln Ser Ala Ser Ser Ser Pro Val Thr Ala Leu Leu Gly
   65                  70                  75                  80
   Leu Leu Gly Ile Val Leu Ser Asp Leu Asn Val Leu Val Gly Ile Ser
                   85                  90                  95
   Cys Ser Pro Leu Thr Val Ile Gly Val Gly Gly Ser Gly Cys Ser Ala
               100                 105                 110
   Gln Thr Val Cys Cys Glu Asn Thr Gln Phe Asn Gly Leu Ile Asn Ile
           115                 120                 125
   Gly Cys Thr Pro Ile Asn Ile Leu
       130                 135
<210> SEQ ID NO:11
<211> 483
<212> DNA
<213> Artificial sequence
<220> CDS
<221> CDS
<222> (1)..(483)
<223> Artificial hydrophobin sequence with characteristic cysteine-pattern
<400> 11
   atg aag ttc tcc gtc tcc gcc gcc gtc ctc gcc ttc gcc gcc tcc gtc        48
   Met Lys Phe Ser Val Ser Ala Ala Val Leu Ala Phe Ala Ala Ser Val
   1               5                   10                  15
   gcc gcc ctc cct cag cac gac tcc gcc gcc ggc aac ggc aac ggc gtc       96
   Ala Ala Leu Pro Gln His Asp Ser Ala Ala Gly Asn Gly Asn Gly Val
               20                  25                  30
   ggc aac aag ttc cct gtc cct gac gac gtc acc gtc aag cag gcc acc      144
   Gly Asn Lys Phe Pro Val Pro Asp Asp Val Thr Val Lys Gln Ala Thr
           35                  40                  45
   gac aag tgc ggc gac cag gcc cag ctc tcc tgc tgc aac aag gcc acc      192
   Asp Lys Cys Gly Asp Gln Ala Gln Leu Ser Cys Cys Asn Lys Ala Thr
       50                  55                  60
   tac gcc ggc gac gtc ctc acc gac atc gac gag ggc atc ctc gcc ggc      240
   Tyr Ala Gly Asp Val Leu Thr Asp Ile Asp Glu Gly Ile Leu Ala Gly
   65                  70                  75                  80
   ctc ctc aag aac ctc atc ggc ggc ggc tcc ggc tcc gag ggc ctc ggc      288
   Leu Leu Lys Asn Leu Ile Gly Gly Gly Ser Gly Ser Glu Gly Leu Gly
                   85                  90                  95
   ctc ttc gac cag tgc gtc aag ctc gac ctc cag atc tcc gtc atc ggc      336
   Leu Phe Asp Gln Cys Val Lys Leu Asp Leu Gln Ile Ser Val Ile Gly
               100                 105                 110
   atc cct atc cag gac ctc ctc aac cag gtc aac aag cag tgc aag cag      384
   Ile Pro Ile Gln Asp Leu Leu Asn Gln Val Asn Lys Gln Cys Lys Gln
           115                 120                 125
   aac atc gcc tgc tgc cag aac tcc cct tcc gac gcc acc ggc tcc ctc      432
   Asn Ile Ala Cys Cys Gln Asn Ser Pro Ser Asp Ala Thr Gly Ser Leu
       130                 135                 140
   gtc aac ctc ggc ctc ggc aac cct tgc atc cct gtc tcc ctc ctc cat      480
   Val Asn Leu Gly Leu Gly Asn Pro Cys Ile Pro Val Ser Leu Leu His
   145                 150                 155                 160
   atg                                                                  483
   Met
<210> SEQ ID NO:12
<211> 161
<212> PRT
<213> Artificial sequence
<220>
<223> Artificial hydrophobin sequence with characteristic cysteine-pattern
<400> 12
   Met Lys Phe Ser Val Ser Ala Ala Val Leu Ala Phe Ala Ala Ser Val
   1               5                   10                  15
   Ala Ala Leu Pro Gln His Asp Ser Ala Ala Gly Asn Gly Asn Gly Val
               20                  25                  30
   Gly Asn Lys Phe Pro Val Pro Asp Asp Val Thr Val Lys Gln Ala Thr
           35                  40                  45
   Asp Lys Cys Gly Asp Gln Ala Gln Leu Ser Cys Cys Asn Lys Ala Thr
       50                  55                  60
   Tyr Ala Gly Asp Val Leu Thr Asp Ile Asp Glu Gly Ile Leu Ala Gly
   65                  70                  75                  80
   Leu Leu Lys Asn Leu Ile Gly Gly Gly Ser Gly Ser Glu Gly Leu Gly
                   85                  90                  95
   Leu Phe Asp Gln Cys Val Lys Leu Asp Leu Gln Ile Ser Val Ile Gly
               100                 105                 110
   Ile Pro Ile Gln Asp Leu Leu Asn Gln Val Asn Lys Gln Cys Lys Gln
           115                 120                 125
   Asn Ile Ala Cys Cys Gln Asn Ser Pro Ser Asp Ala Thr Gly Ser Leu
       130                 135                 140
   Val Asn Leu Gly Leu Gly Asn Pro Cys Ile Pro Val Ser Leu Leu His
   145                 150                 155                 160
   Met
<210> SEQ ID NO:13
<211> 465
<212> DNA
<213> Artificial sequence
<220> CDS
<221> CDS
<222> (1)..(465)
<223> Artificial hydrophobin sequence with characteristic cysteine-pattern
<400> 13
<210> SEQ ID NO:15
<211> 882
<212> DNA
<213> Bacillus subtilis
<220>
<221> CDS
<222> (1)..(882)
<223>
<400> 15
<210> SEQ ID NO:14
<211> 155
<212> PRT
<213> Artificial sequence
<220>
<223> Artificial hydrophobin sequence with characteristic cysteine-pattern
<400> 14 290
<210> SEQ ID NO:16
<211> 294
<212> PRT
<213> Bacillus subtilis
<400> 16
   Met Ala Gln Thr Gly Thr Glu Arg Val Lys Arg Gly Met Ala Glu Met
   1               5                   10                  15
   Gln Lys Gly Gly Val Ile Met Asp Val Ile Asn Ala Glu Gln Ala Lys
               20                  25                  30
   Ile Ala Glu Glu Ala Gly Ala Val Ala Val Met Ala Leu Glu Arg Val
           35                  40                  45
   Pro Ala Asp Ile Arg Ala Ala Gly Gly Val Ala Arg Met Ala Asp Pro
       50                  55                  60
   Thr Ile Val Glu Glu Val Met Asn Ala Val Ser Ile Pro Val Met Ala
   65                  70                  75                  80
   Lys Ala Arg Ile Gly His Ile Val Glu Ala Arg Val Leu Glu Ala Met
                   85                  90                  95
   Gly Val Asp Tyr Ile Asp Glu Ser Glu Val Leu Thr Pro Ala Asp Glu
               100                 105                 110
   Glu Phe His Leu Asn Lys Asn Glu Tyr Thr Val Pro Phe Val Cys Gly
           115                 120                 125
   Cys Arg Asp Leu Gly Glu Ala Thr Arg Arg Ile Ala Glu Gly Ala Ser
       130                 135                 140
   Met Leu Arg Thr Lys Gly Glu Pro Gly Thr Gly Asn Ile Val Glu Ala
   145                 150                 155                 160
   Val Arg His Met Arg Lys Val Asn Ala Gln Val Arg Lys Val Val Ala
                   165                 170                 175
   Met Ser Glu Asp Glu Leu Met Thr Glu Ala Lys Asn Leu Gly Ala Pro
               180                 185                 190
   Tyr Glu Leu Leu Leu Gln Ile Lys Lys Asp Gly Lys Leu Pro Val Val
               195                 200                 205
   Asn Phe Ala Ala Gly Gly Val Ala Thr Pro Ala Asp Ala Ala Leu Met
       210                 215                 220
   Met Gln Leu Gly Ala Asp Gly Val Phe Val Gly Ser Gly Ile Phe Lys
   225                 230                 235                 240
   Ser Asp Asn Pro Ala Lys Phe Ala Lys Ala Ile Val Glu Ala Thr Thr
                   245                 250                 255
   His Phe Thr Asp Tyr Lys Leu Ile Ala Glu Leu Ser Lys Glu Leu Gly
               260                 265                 270
   Thr Ala Met Lys Gly Ile Glu Ile Ser Asn Leu Leu Pro Glu Gln Arg
           275                 280                 285
   Met Gln Glu Arg Gly Trp
       290
<210> SEQ ID NO:17
<211> 591
<212> DNA
<213> Bacillus subtilis
<220>
<221> CDS
<222> (1)..(591)
<223>
<400> 17
   atg gga tta aca ata ggt gta cta gga ctt caa gga gca gtt aga gag      48
   Met Gly Leu Thr Ile Gly Val Leu Gly Leu Gln Gly Ala Val Arg Glu
   1               5                   10                  15
   cac atc cat gcg att gaa gca tgc ggc gcg gct ggt ctt gtc gta aaa      96
   His Ile His Ala Ile Glu Ala Cys Gly Ala Ala Gly Leu Val Val Lys
               20                  25                  30
   cgt ccg gag cag ctg aac gaa gtt gac ggg ttg att ttg ccg ggc ggt     144
   Arg Pro Glu Gln Leu Asn Glu Val Asp Gly Leu Ile Leu Pro Gly Gly
           35                  40                  45
   gag agc acg acg atg cgc cgt ttg atc gat acg tat caa ttc atg gag     192
   Glu Ser Thr Thr Met Arg Arg Leu Ile Asp Thr Tyr Gln Phe Met Glu
       50                  55                  60
   ccg ctt cgt gaa ttc gct gct cag ggc aaa ccg atg ttt gga aca tgt        240
   Pro Leu Arg Glu Phe Ala Ala Gln Gly Lys Pro Met Phe Gly Thr Cys
   65                  70                  75                  80
   gcc gga tta att ata tta gca aaa gaa att gcc ggt tca gat aat cct        288
   Ala Gly Leu Ile Ile Leu Ala Lys Glu Ile Ala Gly Ser Asp Asn Pro
                   85                  90                  95
   cat tta ggt ctt ctg aat gtg gtt gta gaa cgt aat tca ttt ggc cgg        336
   His Leu Gly Leu Leu Asn Val Val Val Glu Arg Asn Ser Phe Gly Arg
               100                 105                 110
   cag gtt gac agc ttt gaa gct gat tta aca att aaa ggc ttg gac gag        384
   Gln Val Asp Ser Phe Glu Ala Asp Leu Thr Ile Lys Gly Leu Asp Glu
           115                 120                 125
   cct ttt act ggg gta ttc atc cgt gct ccg cat att tta gaa gct ggt        432
   Pro Phe Thr Gly Val Phe Ile Arg Ala Pro His Ile Leu Glu Ala Gly
       130                 135                 140
   gaa aat gtt gaa gtt cta tcg gag cat aat ggt cgt att gta gcc gcg        480
   Glu Asn Val Glu Val Leu Ser Glu His Asn Gly Arg Ile Val Ala Ala
   145                 150                 155                 160
   aaa cag ggg caa ttc ctt ggc tgc tca ttc cat ccg gag ctg aca gaa        528
   Lys Gln Gly Gln Phe Leu Gly Cys Ser Phe His Pro Glu Leu Thr Glu
                   165                 170                 175
   gat cac cga gtg acg cag ctg ttt gtt gaa atg gtt gag gaa tat aag        576
   Asp His Arg Val Thr Gln Leu Phe Val Glu Met Val Glu Glu Tyr Lys
               180                 185                 190
   caa aag gca ctt gta                                                    591
   Gln Lys Ala Leu Val
           195
<210> SEQ ID NO:18
<211> 197
<212> PRT
<213> Bacillus subtilis
<400> 18
   Met Gly Leu Thr Ile Gly Val Leu Gly Leu Gln Gly Ala Val Arg Glu
   1               5                   10                  15
   His Ile His Ala Ile Glu Ala Cys Gly Ala Ala Gly Leu Val Val Lys
               20                  25                  30
   Arg Pro Glu Gln Leu Asn Glu Val Asp Gly Leu Ile Leu Pro Gly Gly
           35                  40                  45
   Glu Ser Thr Thr Met Arg Arg Leu Ile Asp Thr Tyr Gln Phe Met Glu
       50                  55                  60
   Pro Leu Arg Glu Phe Ala Ala Gln Gly Lys Pro Met Phe Gly Thr Cys
   65                  70                  75                  80
   Ala Gly Leu Ile Ile Leu Ala Lys Glu Ile Ala Gly Ser Asp Asn Pro
                   85                  90                  95
   His Leu Gly Leu Leu Asn Val Val Val Glu Arg Asn Ser Phe Gly Arg
               100                 105                 110
   Gln Val Asp Ser Phe Glu Ala Asp Leu Thr Ile Lys Gly Leu Asp Glu
           115                 120                 125
   Pro Phe Thr Gly Val Phe Ile Arg Ala Pro His Ile Leu Glu Ala Gly
       130                 135                 140
   Glu Asn Val Glu Val Leu Ser Glu His Asn Gly Arg Ile Val Ala Ala
   145                 150                 155                 160
   Lys Gln Gly Gln Phe Leu Gly Cys Ser Phe His Pro Glu Leu Thr Glu
                   165                 170                 175
   Asp His Arg Val Thr Gln Leu Phe Val Glu Met Val Glu Glu Tyr Lys
               180                 185                 190
   Gln Lys Ala Leu Val
           195
<210> SEQ ID NO:19
<211> 1329
<212> DNA
<213> Artificial sequence
<220> CDS
<221> CDS
<222> (1)..(1329)
<223> fusion protein
<400> 19
   atg gct caa aca ggt act gaa cgt gta aaa cgc gga atg gca gaa atg        48
   Met Ala Gln Thr Gly Thr Glu Arg Val Lys Arg Gly Met Ala Glu Met
   1               5                   10                  15
   caa aaa ggc ggc gtc atc atg gac gtc atc aat gcg gaa caa gcg aaa       96
   Gln Lys Gly Gly Val Ile Met Asp Val Ile Asn Ala Glu Gln Ala Lys
               20                  25                  30
   atc gct gaa gaa gct gga gct gtc gct gta atg gcg cta gaa cgt gtg      144
   Ile Ala Glu Glu Ala Gly Ala Val Ala Val Met Ala Leu Glu Arg Val
           35                  40                  45
   cca gca gat att cgc gcg gct gga gga gtt gcc cgt atg gct gac cct      192
   Pro Ala Asp Ile Arg Ala Ala Gly Gly Val Ala Arg Met Ala Asp Pro
       50                  55                  60
   aca atc gtg gaa gaa gta atg aat gca gta tct atc ccg gta atg gca      240
   Thr Ile Val Glu Glu Val Met Asn Ala Val Ser Ile Pro Val Met Ala
   65                  70                  75                  80
   aaa gcg cgt atc gga cat att gtt gaa gcg cgt gtg ctt gaa gct atg      288
   Lys Ala Arg Ile Gly His Ile Val Glu Ala Arg Val Leu Glu Ala Met
                   85                  90                  95
   ggt gtt gac tat att gat gaa agt gaa gtt ctg acg ccg gct gac gaa      336
   Gly Val Asp Tyr Ile Asp Glu Ser Glu Val Leu Thr Pro Ala Asp Glu
               100                 105                 110
   gaa ttt cat tta aat aaa aat gaa tac aca gtt cct ttt gtc tgt ggc      384
   Glu Phe His Leu Asn Lys Asn Glu Tyr Thr Val Pro Phe Val Cys Gly
           115                 120                 125
   tgc cgt gat ctt ggt gaa gca aca cgc cgt att gcg gaa ggt gct tct      432
   Cys Arg Asp Leu Gly Glu Ala Thr Arg Arg Ile Ala Glu Gly Ala Ser
       130                 135                 140
   atg ctt cgc aca aaa ggt gag cct gga aca ggt aat att gtt gag gct      480
   Met Leu Arg Thr Lys Gly Glu Pro Gly Thr Gly Asn Ile Val Glu Ala
   145                 150                 155                 160
   gtt cgc cat atg cgt aaa gtt aac gct caa gtg cgc aaa gta gtt gcg      528
   Val Arg His Met Arg Lys Val Asn Ala Gln Val Arg Lys Val Val Ala
                   165                 170                 175
   atg agt gag gat gag cta atg aca gaa gcg aaa aac cta ggt gct cct      576
   Met Ser Glu Asp Glu Leu Met Thr Glu Ala Lys Asn Leu Gly Ala Pro
               180                 185                 190
   tac gag ctt ctt ctt caa att aaa aaa gac ggc aag ctt cct gtc gtt      624
   Tyr Glu Leu Leu Leu Gln Ile Lys Lys Asp Gly Lys Leu Pro Val Val
           195                 200                 205
   aac ttt gcc gct ggc ggc gta gca act cca gct gat gct gct ctc atg      672
   Asn Phe Ala Ala Gly Gly Val Ala Thr Pro Ala Asp Ala Ala Leu Met
       210                 215                 220
   atg cag ctt ggt gct gac gga gta ttt gtt ggt tct ggt att ttt aaa      720
   Met Gln Leu Gly Ala Asp Gly Val Phe Val Gly Ser Gly Ile Phe Lys
   225                 230                 235                 240
   tca gac aac cct gct aaa ttt gcg aaa gca att gtg gaa gca aca act      768
   Ser Asp Asn Pro Ala Lys Phe Ala Lys Ala Ile Val Glu Ala Thr Thr
                   245                 250                 255
   cac ttt act gat tac aaa tta atc gct gag ttg tca aaa gag ctt ggt      816
   His Phe Thr Asp Tyr Lys Leu Ile Ala Glu Leu Ser Lys Glu Leu Gly
               260                 265                 270
   act gca atg aaa ggg att gaa atc tca aac tta ctt cca gaa cag cgt      864
   Thr Ala Met Lys Gly Ile Glu Ile Ser Asn Leu Leu Pro Glu Gln Arg
           275                 280                 285
   atg caa gaa cgc ggc tgg aga tcc att gaa ggc cgc atg cgc ttc atc      912
   Met Gln Glu Arg Gly Trp Arg Ser Ile Glu Gly Arg Met Arg Phe Ile
       290                 295                 300
   gtc tct ctc ctc gcc ttc act gcc gcg gcc acc gcg acc gcc ctc ccg      960
   Val Ser Leu Leu Ala Phe Thr Ala Ala Ala Thr Ala Thr Ala Leu Pro
   305                 310                 315                 320
   gcc tct gcc gca aag aac gcg aag ctg gcc acc tcg gcg gcc ttc gcc     1008
   Ala Ser Ala Ala Lys Asn Ala Lys Leu Ala Thr Ser Ala Ala Phe Ala
                   325                 330                 335
   aag cag gct gaa ggc acc acc tgc aat gtc ggc tcg atc gct tgc tgc     1056
   Lys Gln Ala Glu Gly Thr Thr Cys Asn Val Gly Ser Ile Ala Cys Cys
               340                 345                 350
   aac tcc ccc gct gag acc aac aac gac agt ctg ttg agc ggt ctg ctc     1104
   Asn Ser Pro Ala Glu Thr Asn Asn Asp Ser Leu Leu Ser Gly Leu Leu
           355                 360                 365
   ggt gct ggc ctt ctc aac ggg ctc tcg ggc aac act ggc agc gcc tgc     1152
   Gly Ala Gly Leu Leu Asn Gly Leu Ser Gly Asn Thr Gly Ser Ala Cys
       370                 375                 380
   gcc aag gcg agc ttg att gac cag ctg ggt ctg ctc gct ctc gtc gac     1200
   Ala Lys Ala Ser Leu Ile Asp Gln Leu Gly Leu Leu Ala Leu Val Asp
   385                 390                 395                 400
   cac act gag gaa ggc ccc gtc tgc aag aac atc gtc gct tgc tgc cct     1248
   His Thr Glu Glu Gly Pro Val Cys Lys Asn Ile Val Ala Cys Cys Pro
                   405                 410                 415
   gag gga acc acc aac tgt gtt gcc gtc gac aac gct ggc gct ggt acc     1296
   Glu Gly Thr Thr Asn Cys Val Ala Val Asp Asn Ala Gly Ala Gly Thr
               420                 425                 430
   aag gct gag gga tct cat cac cat cac cat cac                         1329
   Lys Ala Glu Gly Ser His His His His His His
           435                 440
<210> SEQ ID NO:20
<211> 443
<212> PRT
<213> Artificial sequence
<220>
<223> fusion protein
<400> 20
   Met Ala Gln Thr Gly Thr Glu Arg Val Lys Arg Gly Met Ala Glu Met
   1               5                   10                  15
   Gln Lys Gly Gly Val Ile Met Asp Val Ile Asn Ala Glu Gln Ala Lys
               20                  25                  30
   Ile Ala Glu Glu Ala Gly Ala Val Ala Val Met Ala Leu Glu Arg Val
           35                  40                  45
   Pro Ala Asp Ile Arg Ala Ala Gly Gly Val Ala Arg Met Ala Asp Pro
       50                  55                  60
   Thr Ile Val Glu Glu Val Met Asn Ala Val Ser Ile Pro Val Met Ala
   65                  70                  75                  80
   Lys Ala Arg Ile Gly His Ile Val Glu Ala Arg Val Leu Glu Ala Met
                   85                  90                  95
   Gly Val Asp Tyr Ile Asp Glu Ser Glu Val Leu Thr Pro Ala Asp Glu
               100                 105                 110
   Glu Phe His Leu Asn Lys Asn Glu Tyr Thr Val Pro Phe Val Cys Gly
           115                 120                 125
   Cys Arg Asp Leu Gly Glu Ala Thr Arg Arg Ile Ala Glu Gly Ala Ser
       130                 135                 140
   Met Leu Arg Thr Lys Gly Glu Pro Gly Thr Gly Asn Ile Val Glu Ala
   145                 150                 155                 160
   Val Arg His Met Arg Lys Val Asn Ala Gln Val Arg Lys Val Val Ala
                   165                 170                 175
   Met Ser Glu Asp Glu Leu Met Thr Glu Ala Lys Asn Leu Gly Ala Pro
               180                 185                 190
   Tyr Glu Leu Leu Leu Gln Ile Lys Lys Asp Gly Lys Leu Pro Val Val
           195                 200                 205
   Asn Phe Ala Ala Gly Gly Val Ala Thr Pro Ala Asp Ala Ala Leu Met
       210                 215                 220
   Met Gln Leu Gly Ala Asp Gly Val Phe Val Gly Ser Gly Ile Phe Lys
   225                 230                 235                 240
   Ser Asp Asn Pro Ala Lys Phe Ala Lys Ala Ile Val Glu Ala Thr Thr
                   245                 250                 255
   His Phe Thr Asp Tyr Lys Leu Ile Ala Glu Leu Ser Lys Glu Leu Gly
               260                 265                 270
   Thr Ala Met Lys Gly Ile Glu Ile Ser Asn Leu Leu Pro Glu Gln Arg
           275                 280                 285
   Met Gln Glu Arg Gly Trp Arg Ser Ile Glu Gly Arg Met Arg Phe Ile
       290                 295                 300
   Val Ser Leu Leu Ala Phe Thr Ala Ala Ala Thr Ala Thr Ala Leu Pro
   305                 310                 315                 320
   Ala Ser Ala Ala Lys Asn Ala Lys Leu Ala Thr Ser Ala Ala Phe Ala
                   325                 330                 335
   Lys Gln Ala Glu Gly Thr Thr Cys Asn Val Gly Ser Ile Ala Cys Cys
               340                 345                 350
   Asn Ser Pro Ala Glu Thr Asn Asn Asp Ser Leu Leu Ser Gly Leu Leu
           355                 360                 365
   Gly Ala Gly Leu Leu Asn Gly Leu Ser Gly Asn Thr Gly Ser Ala Cys
       370                 375                 380
   Ala Lys Ala Ser Leu Ile Asp Gln Leu Gly Leu Leu Ala Leu Val Asp
   385                 390                 395                 400
   His Thr Glu Glu Gly Pro Val Cys Lys Asn Ile Val Ala Cys Cys Pro
                   405                 410                 415
   Glu Gly Thr Thr Asn Cys Val Ala Val Asp Asn Ala Gly Ala Gly Thr
               420                 425                 430
   Lys Ala Glu Gly Ser His His His His His His
           435                 440
<210> SEQ ID NO:21
<211> 1395
<212> DNA
<213> Artificial seqence
<220> CDS
<221> CDS
<222> (1)..(1395)
<223> fusion protein
<400> 21
   atg gct caa aca ggt act gaa cgt gta aaa cgc gga atg gca gaa atg      48
   Met Ala Gln Thr Gly Thr Glu Arg Val Lys Arg Gly Met Ala Glu Met
   1               5                   10                  15
   caa aaa ggc ggc gtc atc atg gac gtc atc aat gcg gaa caa gcg aaa      96
   Gln Lys Gly Gly Val Ile Met Asp Val Ile Asn Ala Glu Gln Ala Lys
               20                  25                  30
   atc gct gaa gaa gct gga gct gtc gct gta atg gcg cta gaa cgt gtg     144
   Ile Ala Glu Glu Ala Gly Ala Val Ala Val Met Ala Leu Glu Arg Val
           35                  40                  45
   cca gca gat att cgc gcg gct gga gga gtt gcc cgt atg gct gac cct     192
   Pro Ala Asp Ile Arg Ala Ala Gly Gly Val Ala Arg Met Ala Asp Pro
       50                  55                  60
   aca atc gtg gaa gaa gta atg aat gca gta tct atc ccg gta atg gca     240
   Thr Ile Val Glu Glu Val Met Asn Ala Val Ser Ile Pro Val Met Ala
   65                  70                  75                  80
   aaa gcg cgt atc gga cat att gtt gaa gcg cgt gtg ctt gaa gct atg     288
   Lys Ala Arg Ile Gly His Ile Val Glu Ala Arg Val Leu Glu Ala Met
                   85                  90                  95
   ggt gtt gac tat att gat gaa agt gaa gtt ctg acg ccg gct gac gaa     336
   Gly Val Asp Tyr Ile Asp Glu Ser Glu Val Leu Thr Pro Ala Asp Glu
               100                 105                 110
   gaa ttt cat tta aat aaa aat gaa tac aca gtt cct ttt gtc tgt ggc     384
   Glu Phe His Leu Asn Lys Asn Glu Tyr Thr Val Pro Phe Val Cys Gly
           115                 120                 125
   tgc cgt gat ctt ggt gaa gca aca cgc cgt att gcg gaa ggt gct tct     432
   Cys Arg Asp Leu Gly Glu Ala Thr Arg Arg Ile Ala Glu Gly Ala Ser
       130                 135                 140
   atg ctt cgc aca aaa ggt gag cct gga aca ggt aat att gtt gag gct     480
   Met Leu Arg Thr Lys Gly Glu Pro Gly Thr Gly Asn Ile Val Glu Ala
   145                 150                 155                 160
   gtt cgc cat atg cgt aaa gtt aac gct caa gtg cgc aaa gta gtt gcg     528
   Val Arg His Met Arg Lys Val Asn Ala Gln Val Arg Lys Val Val Ala
                   165                 170                 175
   atg agt gag gat gag cta atg aca gaa gcg aaa aac cta ggt gct cct     576
   Met Ser Glu Asp Glu Leu Met Thr Glu Ala Lys Asn Leu Gly Ala Pro
               180                 185                 190
   tac gag ctt ctt ctt caa att aaa aaa gac ggc aag ctt cct gtc gtt     624
   Tyr Glu Leu Leu Leu Gln Ile Lys Lys Asp Gly Lys Leu Pro Val Val
           195                 200                 205
   aac ttt gcc gct ggc ggc gta gca act cca gct gat gct gct ctc atg     672
   Asn Phe Ala Ala Gly Gly Val Ala Thr Pro Ala Asp Ala Ala Leu Met
       210                 215                 220
   atg cag ctt ggt gct gac gga gta ttt gtt ggt tct ggt att ttt aaa     720
   Met Gln Leu Gly Ala Asp Gly Val Phe Val Gly Ser Gly Ile Phe Lys
   225                 230                 235                 240
   tca gac aac cct gct aaa ttt gcg aaa gca att gtg gaa gca aca act      768
   Ser Asp Asn Pro Ala Lys Phe Ala Lys Ala Ile Val Glu Ala Thr Thr
                   245                 250                 255
   cac ttt act gat tac aaa tta atc gct gag ttg tca aaa gag ctt ggt      816
   His Phe Thr Asp Tyr Lys Leu Ile Ala Glu Leu Ser Lys Glu Leu Gly
               260                 265                 270
   act gca atg aaa ggg att gaa atc tca aac tta ctt cca gaa cag cgt      864
   Thr Ala Met Lys Gly Ile Glu Ile Ser Asn Leu Leu Pro Glu Gln Arg
           275                 280                 285
   atg caa gaa cgc ggc tgg aga tct att gaa ggc cgc atg aag ttc tcc      912
   Met Gln Glu Arg Gly Trp Arg Ser Ile Glu Gly Arg Met Lys Phe Ser
       290                 295                 300
   att gct gcc gct gtc gtt gct ttc gcc gcc tcc gtc gcg gcc ctc cct      960
   Ile Ala Ala Ala Val Val Ala Phe Ala Ala Ser Val Ala Ala Leu Pro
   305                 310                 315                 320
   cct gcc cat gat tcc cag ttc gct ggc aat ggt gtt ggc aac aag ggc     1008
   Pro Ala His Asp Ser Gln Phe Ala Gly Asn Gly Val Gly Asn Lys Gly
                   325                 330                 335
   aac agc aac gtc aag ttc cct gtc ccc gaa aac gtg acc gtc aag cag     1056
   Asn Ser Asn Val Lys Phe Pro Val Pro Glu Asn Val Thr Val Lys Gln
               340                 345                 350
   gcc tcc gac aag tgc ggt gac cag gcc cag ctc tct tgc tgc aac aag     1104
   Ala Ser Asp Lys Cys Gly Asp Gln Ala Gln Leu Ser Cys Cys Asn Lys
           355                 360                 365
   gcc acg tac gcc ggt gac acc aca acc gtt gat gag ggt ctt ctg tct     1152
   Ala Thr Tyr Ala Gly Asp Thr Thr Thr Val Asp Glu Gly Leu Leu Ser
       370                 375                 380
   ggt gcc ctc agc ggc ctc atc ggc gcc ggg tct ggt gcc gaa ggt ctt     1200
   Gly Ala Leu Ser Gly Leu Ile Gly Ala Gly Ser Gly Ala Glu Gly Leu
   385                 390                 395                 400
   ggt ctc ttc gat cag tgc tcc aag ctt gat gtt gct gtc ctc att ggc     1248
   Gly Leu Phe Asp Gln Cys Ser Lys Leu Asp Val Ala Val Leu Ile Gly
                   405                 410                 415
   atc caa gat ctt gtc aac cag aag tgc aag caa aac att gcc tgc tgc     1296
   Ile Gln Asp Leu Val Asn Gln Lys Cys Lys Gln Asn Ile Ala Cys Cys
               420                 425                 430
   cag aac tcc ccc tcc agc gcg gat ggc aac ctt att ggt gtc ggt ctc     1344
   Gln Asn Ser Pro Ser Ser Ala Asp Gly Asn Leu Ile Gly Val Gly Leu
           435                 440                 445
   cct tgc gtt gcc ctt ggc tcc atc ctc gga tct cat cac cat cac cat     1392
   Pro Cys Val Ala Leu Gly Ser Ile Leu Gly Ser His His His His His
       450                 455                 460
   cac                                                                 1395
   His
   465
<210> SEQ ID NO:22
<211> 465
<212> PRT
<213> Artificial sequence
<220>
<223> fusion protein
<400> 22
   Met Ala Gln Thr Gly Thr Glu Arg Val Lys Arg Gly Met Ala Glu Met
   1               5                   10                  15
   Gln Lys Gly Gly Val Ile Met Asp Val Ile Asn Ala Glu Gln Ala Lys
               20                  25                  30
   Ile Ala Glu Glu Ala Gly Ala Val Ala Val Met Ala Leu Glu Arg Val
           35                  40                  45
   Pro Ala Asp Ile Arg Ala Ala Gly Gly Val Ala Arg Met Ala Asp Pro
       50                  55                  60
   Thr Ile Val Glu Glu Val Met Asn Ala Val Ser Ile Pro Val Met Ala
   65                  70                  75                  80
   Lys Ala Arg Ile Gly His Ile Val Glu Ala Arg Val Leu Glu Ala Met
                   85                  90                  95
   Gly Val Asp Tyr Ile Asp Glu Ser Glu Val Leu Thr Pro Ala Asp Glu
               100                 105                 110
   Glu Phe His Leu Asn Lys Asn Glu Tyr Thr Val Pro Phe Val Cys Gly
           115                 120                 125
   Cys Arg Asp Leu Gly Glu Ala Thr Arg Arg Ile Ala Glu Gly Ala Ser
       130                 135                 140
   Met Leu Arg Thr Lys Gly Glu Pro Gly Thr Gly Asn Ile Val Glu Ala
   145                 150                 155                 160
   Val Arg His Met Arg Lys Val Asn Ala Gln Val Arg Lys Val Val Ala
                   165                 170                 175
   Met Ser Glu Asp Glu Leu Met Thr Glu Ala Lys Asn Leu Gly Ala Pro
               180                 185                 190
   Tyr Glu Leu Leu Leu Gln Ile Lys Lys Asp Gly Lys Leu Pro Val Val
           195                 200                 205
   Asn Phe Ala Ala Gly Gly Val Ala Thr Pro Ala Asp Ala Ala Leu Met
       210                 215                 220
   Met Gln Leu Gly Ala Asp Gly Val Phe Val Gly Ser Gly Ile Phe Lys
   225                 230                 235                 240
   Ser Asp Asn Pro Ala Lys Phe Ala Lys Ala Ile Val Glu Ala Thr Thr
                   245                 250                 255
   His Phe Thr Asp Tyr Lys Leu Ile Ala Glu Leu Ser Lys Glu Leu Gly
               260                 265                 270
   Thr Ala Met Lys Gly Ile Glu Ile Ser Asn Leu Leu Pro Glu Gln Arg
           275                 280                 285
   Met Gln Glu Arg Gly Trp Arg Ser Ile Glu Gly Arg Met Lys Phe Ser
       290                 295                 300
   Ile Ala Ala Ala Val Val Ala Phe Ala Ala Ser Val Ala Ala Leu Pro
   305                 310                 315                 320
   Pro Ala His Asp Ser Gln Phe Ala Gly Asn Gly Val Gly Asn Lys Gly
                   325                 330                 335
   Asn Ser Asn Val Lys Phe Pro Val Pro Glu Asn Val Thr Val Lys Gln
               340                 345                 350
   Ala Ser Asp Lys Cys Gly Asp Gln Ala Gln Leu Ser Cys Cys Asn Lys
           355                 360                 365
   Ala Thr Tyr Ala Gly Asp Thr Thr Thr Val Asp Glu Gly Leu Leu Ser
       370                 375                 380
   Gly Ala Leu Ser Gly Leu Ile Gly Ala Gly Ser Gly Ala Glu Gly Leu
   385                 390                 395                 400
   Gly Leu Phe Asp Gln Cys Ser Lys Leu Asp Val Ala Val Leu Ile Gly
                   405                 410                 415
   Ile Gln Asp Leu Val Asn Gln Lys Cys Lys Gln Asn Ile Ala Cys Cys
               420                 425                 430
   Gln Asn Ser Pro Ser Ser Ala Asp Gly Asn Leu Ile Gly Val Gly Leu
           435                 440                 445
   Pro Cys Val Ala Leu Gly Ser Ile Leu Gly Ser His His His His His
       450                 455                 460
   His
   465
<210> SEQ ID NO:23
<211> 1407
<212> DNA
<213> Artificial sequence
<220> CDS
<221> CDS
<222> (1)..(1407)
<223> fusion protein
<400> 23
   atg gct caa aca ggt act gaa cgt gta aaa cgc gga atg gca gaa atg      48
   Met Ala Gln Thr Gly Thr Glu Arg Val Lys Arg Gly Met Ala Glu Met
   1               5                   10                  15
   caa aaa ggc ggc gtc atc atg gac gtc atc aat gcg gaa caa gcg aaa      96
   Gln Lys Gly Gly Val Ile Met Asp Val Ile Asn Ala Glu Gln Ala Lys
               20                  25                  30
   atc gct gaa gaa gct gga gct gtc gct gta atg gcg cta gaa cgt gtg     144
   Ile Ala Glu Glu Ala Gly Ala Val Ala Val Met Ala Leu Glu Arg Val
           35                  40                  45
   cca gca gat att cgc gcg gct gga gga gtt gcc cgt atg gct gac cct     192
   Pro Ala Asp Ile Arg Ala Ala Gly Gly Val Ala Arg Met Ala Asp Pro
       50                  55                  60
   aca atc gtg gaa gaa gta atg aat gca gta tct atc ccg gta atg gca     240
   Thr Ile Val Glu Glu Val Met Asn Ala Val Ser Ile Pro Val Met Ala
   65                  70                  75                  80
   aaa gcg cgt atc gga cat att gtt gaa gcg cgt gtg ctt gaa gct atg     288
   Lys Ala Arg Ile Gly His Ile Val Glu Ala Arg Val Leu Glu Ala Met
                   85                  90                  95
   ggt gtt gac tat att gat gaa agt gaa gtt ctg acg ccg gct gac gaa     336
   Gly Val Asp Tyr Ile Asp Glu Ser Glu Val Leu Thr Pro Ala Asp Glu
               100                 105                 110
   gaa ttt cat tta aat aaa aat gaa tac aca gtt cct ttt gtc tgt ggc     384
   Glu Phe His Leu Asn Lys Asn Glu Tyr Thr Val Pro Phe Val Cys Gly
           115                 120                 125
   tgc cgt gat ctt ggt gaa gca aca cgc cgt att gcg gaa ggt gct tct     432
   Cys Arg Asp Leu Gly Glu Ala Thr Arg Arg Ile Ala Glu Gly Ala Ser
       130                 135                 140
   atg ctt cgc aca aaa ggt gag cct gga aca ggt aat att gtt gag gct       480
   Met Leu Arg Thr Lys Gly Glu Pro Gly Thr Gly Asn Ile Val Glu Ala
   145                 150                 155                 160
   gtt cgc cat atg cgt aaa gtt aac gct caa gtg cgc aaa gta gtt gcg       528
   Val Arg His Met Arg Lys Val Asn Ala Gln Val Arg Lys Val Val Ala
                   165                 170                 175
   atg agt gag gat gag cta atg aca gaa gcg aaa aac cta ggt gct cct       576
   Met Ser Glu Asp Glu Leu Met Thr Glu Ala Lys Asn Leu Gly Ala Pro
               180                 185                 190
   tac gag ctt ctt ctt caa att aaa aaa gac ggc aag ctt cct gtc gtt       624
   Tyr Glu Leu Leu Leu Gln Ile Lys Lys Asp Gly Lys Leu Pro Val Val
           195                 200                 205
   aac ttt gcc gct ggc ggc gta gca act cca gct gat gct gct ctc atg       672
   Asn Phe Ala Ala Gly Gly Val Ala Thr Pro Ala Asp Ala Ala Leu Met
       210                 215                 220
   atg cag ctt ggt gct gac gga gta ttt gtt ggt tct ggt att ttt aaa       720
   Met Gln Leu Gly Ala Asp Gly Val Phe Val Gly Ser Gly Ile Phe Lys
   225                 230                 235                 240
   tca gac aac cct gct aaa ttt gcg aaa gca att gtg gaa gca aca act       768
   Ser Asp Asn Pro Ala Lys Phe Ala Lys Ala Ile Val Glu Ala Thr Thr
                   245                 250                 255
   cac ttt act gat tac aaa tta atc gct gag ttg tca aaa gag ctt ggt       816
   His Phe Thr Asp Tyr Lys Leu Ile Ala Glu Leu Ser Lys Glu Leu Gly
               260                 265                 270
   act gca atg aaa ggg att gaa atc tca aac tta ctt cca gaa cag cgt       864
   Thr Ala Met Lys Gly Ile Glu Ile Ser Asn Leu Leu Pro Glu Gln Arg
           275                 280                 285
   atg caa gaa cgc ggc tgg aga tct att gaa ggc cgc atg aag ttc tcc       912
   Met Gln Glu Arg Gly Trp Arg Ser Ile Glu Gly Arg Met Lys Phe Ser
       290                 295                 300
   gtc tcc gcc gcc gtc ctc gcc ttc gcc gcc tcc gtc gcc gcc ctc cct       960
   Val Ser Ala Ala Val Leu Ala Phe Ala Ala Ser Val Ala Ala Leu Pro
   305                 310                 315                 320
   cag cac gac tcc gcc gcc ggc aac ggc aac ggc gtc ggc aac aag ttc      1008
   Gln His Asp Ser Ala Ala Gly Asn Gly Asn Gly Val Gly Asn Lys Phe
                   325                 330                 335
   cct gtc cct gac gac gtc acc gtc aag cag gcc acc gac aag tgc ggc      1056
   Pro Val Pro Asp Asp Val Thr Val Lys Gln Ala Thr Asp Lys Cys Gly
               340                 345                 350
   gac cag gcc cag ctc tcc tgc tgc aac aag gcc acc tac gcc ggc gac      1104
   Asp Gln Ala Gln Leu Ser Cys Cys Asn Lys Ala Thr Tyr Ala Gly Asp
           355                 360                 365
   gtc ctc acc gac atc gac gag ggc atc ctc gcc ggc ctc ctc aag aac      1152
   Val Leu Thr Asp Ile Asp Glu Gly Ile Leu Ala Gly Leu Leu Lys Asn
       370                 375                 380
   ctc atc ggc ggc ggc tcc ggc tcc gag ggc ctc ggc ctc ttc gac cag      1200
   Leu Ile Gly Gly Gly Ser Gly Ser Glu Gly Leu Gly Leu Phe Asp Gln
   385                 390                 395                 400
   tgc gtc aag ctc gac ctc cag atc tcc gtc atc ggc atc cct atc cag      1248
   Cys Val Lys Leu Asp Leu Gln Ile Ser Val Ile Gly Ile Pro Ile Gln
                   405                 410                 415
   gac ctc ctc aac cag gtc aac aag cag tgc aag cag aac atc gcc tgc      1296
   Asp Leu Leu Asn Gln Val Asn Lys Gln Cys Lys Gln Asn Ile Ala Cys
               420                 425                 430
   tgc cag aac tcc cct tcc gac gcc acc ggc tcc ctc gtc aac ctc ggc      1344
   Cys Gln Asn Ser Pro Ser Asp Ala Thr Gly Ser Leu Val Asn Leu Gly
           435                 440                 445
   ctc ggc aac cct tgc atc cct gtc tcc ctc ctc cat atg gga tct cat      1392
   Leu Gly Asn Pro Cys Ile Pro Val Ser Leu Leu His Met Gly Ser His
       450                 455                 460
   cac cat cac cat cac                                                  1407
   His His His His His
   465
<210> SEQ ID NO:24
<211> 469
<212> PRT
<213> Artificial sequence
<220>
<223> fusion protein
<400> 24